# EUROPEAN PATENT APPLICATION

(11) **EP 4 645 535 A1**
(43) Date of publication of application: **05.11.2025**
(21) Application number: 23928298.1
(22) Date of filing: 22.09.2023
(51) Int. Cl.: H01M 50/116, H01M 50/102, H01M 50/131, H01M 50/10

(54) **BATTERY CELL, BATTERY, AND ELECTRIC DEVICE**

(30) Priority: 17.03.2023 CN 202310264496
(71) Applicant: Contemporary Amperex Technology (Hong Kong) Limited, Hong Kong (HK)
(72) Inventor: ZHOU, Wenlin, Ningde, Fujian 352100 (CN); XU, Liangfan, Ningde, Fujian 352100 (CN); LI, Quankun, Ningde, Fujian 352100 (CN); WANG, Peng, Ningde, Fujian 352100 (CN)
(74) Representative: Kraus & Lederer PartGmbB
(86) International application number: PCT/CN2023/120703
(87) International publication number: WO 2024/192993

(57) **Abstract**

This application relates to the field of batteries, and provides a battery cell, a battery, and a power consuming device. The battery cell includes a housing and a protective member. The housing includes a case and an end cover. An opening is formed in at least one end of the case in a first direction, and the end cover closes the opening. The end cover is connected to the case to form a connection portion. The protective member includes a main body portion and a first flange portion. The main body portion surrounds an outer surface of the case. In the first direction, the first flange portion is connected to an end of the main body portion, and the first flange portion is disposed on the end cover and covers at least a part of the connection portion. The main body portion of the protective member surrounds the outer surface of the case such that the case can be protected, thereby reducing the risk of damage to the case. The first flange portion covers at least a part of the connection portion such that liquid leakage from the connection portion can be prevented to a certain extent, thereby reducing the liquid leakage speed, and improving the reliability of the battery cell to a certain extent.

## Description

### CROSS-REFERENCE TO RELATED APPLICATIONS

This application claims priority to Chinese Patent Application (Application No.: 2023102644962), entitled "BATTERY CELL, BATTERY, AND POWER CONSUMING DEVICE" and filed on March 17, 2023, which is incorporated herein by reference in its entirety.

### TECHNICAL FIELD

This application relates to the field of batteries, and in particular, to a battery cell, a battery, and a power consuming device.

### BACKGROUND

Batteries have been extensively adopted in the new energy sector, for example, in electric vehicles and new energy vehicles. New energy vehicles and electric vehicles have emerged as a transformative trend in the automotive industry. The advancement of battery technology necessitates a holistic consideration of multifaceted design factors, for example, performance parameters such as energy density, discharge capacity, and charge/discharge rates. In addition, the reliability of batteries further needs to be taken into consideration. However, batteries have suboptimal reliability at present.

### SUMMARY

An objective of embodiments of this application provide a battery cell, a battery, and a power consuming device, to address the suboptimal reliability of batteries in conventional technologies.

According to a first aspect, an embodiment of this application provides a battery cell. The battery cell includes a housing and a protective member. The housing includes a case and an end cover, where an opening is formed in at least one end of the case in a first direction, the end cover closes the opening, and the end cover is connected to the case to form a connection portion. The protective member includes a main body portion and a first flange portion, where the main body portion surrounds an outer surface of the case, and in the first direction, the first flange portion is connected to an end of the main body portion, and the first flange portion is disposed on the end cover and covers at least a part of the connection portion.

In the foregoing technical solution, the case and the end cover define an accommodating space, and the accommodating space is configured for accommodating an electrode assembly of the battery cell. The opening is formed in at least one end of the case in the first direction, to allow entry of the electrode assembly into the case through the opening. After the electrode assembly enters the case, the end cover closes the opening to isolate the electrode assembly from an external environment. The main body portion of the protective member surrounds the outer surface of the case such that the case can be protected, thereby reducing the risk of damage to the case. The first flange portion covers at least a part of the connection portion such that liquid leakage from the connection portion can be prevented to a certain extent, thereby reducing the liquid leakage speed, and improving the reliability of the battery cell to a certain extent.

In an optional technical solution of the embodiments of this application, the first flange portion includes a first absorbent layer, and the first absorbent layer is configured to absorb liquid.

In the foregoing technical solution, the first absorbent layer can absorb liquid leaking from the connection portion, to mitigate the risk of short-circuit-induced fire or ignition caused by high-voltage arcing due to spreading of liquid leaking from the connection portion, thereby improving the reliability of the battery cell.

In an optional technical solution of the embodiments of this application, the protective member is provided with a first adhesive layer, and the first adhesive layer connects the first absorbent layer and the end cover.

In the foregoing technical solution, the first absorbent layer and the end cover are bonded by the first adhesive layer such that the first absorbent layer and the end cover are conveniently connected and manufacturing costs are low.

In an optional technical solution of the embodiments of this application, the first absorbent layer includes a first adhesive-free zone without the first adhesive layer, and in the first direction, a projection of the first adhesive-free zone covers at least a part of the connection portion.

In the foregoing technical solution, the first adhesive layer may block liquid from flowing to the first absorbent layer, affecting liquid absorption in the first absorbent layer. Therefore, the first adhesive-free zone is disposed in a region of the first absorbent layer that corresponds to the connection portion, and the first adhesive layer is not disposed in the first adhesive-free zone, thereby enabling liquid leaking from the connection portion to flow to the first absorbent layer to be absorbed by the first absorbent layer.

In an optional technical solution of the embodiments of this application, the first adhesive-free zone is connected to the main body portion, a width of the first adhesive-free zone is A, and a width of the first absorbent layer is B, satisfying 0.1B ≤ A ≤ 0.6B.

In the foregoing technical solution, the width of the first adhesive-free zone is set to 0.1 to 0.6 times the width of the first absorbent layer, to allow liquid leaking from the connection portion to flow to the first absorbent layer without affecting the bonding of the first absorbent layer. When A < 0.1B, the width of the first adhesive-free zone is small, and the first adhesive layer blocks liquid effectively. As a result, liquid leaking from the connection portion is obstructed from flowing to the first absorbent layer and fails to be absorbed by the first absorbent layer, and the risk of short-circuit-induced fire or ignition caused by high-voltage arcing due to spreading of liquid is increased. When A > 0.6B, the width of the first adhesive-free zone is excessively large, and as a result a width of the first adhesive layer is small. The connection strength between the first absorbent layer and the end cover is low, and the first flange portion is prone to detachment from the end cover.

In an optional technical solution of the embodiments of this application, the protective member is provided with a second adhesive layer, and the second adhesive layer connects the main body portion and the case.

In the foregoing technical solution, the main body portion and the case are bonded by the second adhesive layer such that the main body portion and the case are conveniently connected, and manufacturing costs are low.

In an optional technical solution of the embodiments of this application, the main body portion includes a second adhesive-free zone without the second adhesive layer, in a second direction, a projection of the second adhesive-free zone covers at least a part of the connection portion, and the second direction is perpendicular to the first direction.

In the foregoing technical solution, during manufacturing, because an adhesive is fluid, when bonding the main body portion and the case, the adhesive tends to flow downward under gravity to form the second adhesive-free zone on the main body portion. The second adhesive layer is not disposed on the second adhesive-free zone such that in one aspect manufacturing can be simplified, and in another aspect, because the projection of the second adhesive-free zone covers at least a part of the connection portion, liquid leaking from the connection portion can flow between the second adhesive-free zone and the case for temporary storage, thereby enabling the protective member to absorb or store more liquid, further reducing the risk of short-circuit-induced fire or ignition caused by high-voltage arcing due to spreading of liquid, and improving the reliability of the battery cell.

In an optional technical solution of the embodiments of this application, the second adhesive-free zone is connected to the first adhesive-free zone, and in the first direction, a width of the second adhesive-free zone is C, satisfying 2 mm ≤ C ≤ 10 mm.

In the foregoing technical solution, the width of the second adhesive-free zone is set to 2 to 10 mm such that a large space is provided between the second adhesive-free zone and the case to store liquid temporarily without affecting the bonding of the main body portion. When C < 2 mm, the width of the second adhesive-free zone is small, and the space between the second adhesive-free zone and the case is small and an amount of liquid that can be stored temporarily is small. When C > 10 mm, the width of the second adhesive-free zone is excessively large, and as a result a width of the second adhesive layer is small. The connection strength between the main body portion and the case is low, and the main body portion is prone to detachment from the case.

In an optional technical solution of the embodiments of this application, a first accommodating groove is provided in an outer surface of the end cover, and the first accommodating groove is configured to accommodate the liquid.

In the foregoing technical solution, the first accommodating groove is provided, and liquid leaking from the connection portion can flow into the first accommodating groove for temporary storage, thereby enabling the protective member to absorb or store more liquid, further reducing the risk of short-circuit-induced fire or ignition caused by high-voltage arcing due to spreading of liquid, and improving the reliability of the battery cell.

In an optional technical solution of the embodiments of this application, the first absorbent layer covers the first accommodating groove.

In the foregoing technical solution, liquid leaking from the connection portion can be absorbed by the first absorbent layer. As the first absorbent layer is gradually saturated, the liquid absorbed by the first absorbent layer can drop into the first accommodating groove under gravity or can be transferred into the first accommodating groove in another manner (for example, an absorbent material is filled in the first accommodating groove to transfer the liquid absorbed by the first absorbent layer into the absorbent material).

In an optional technical solution of the embodiments of this application, a second accommodating groove is provided in the outer surface of the case, and the second accommodating groove is configured to accommodate the liquid.

In the foregoing technical solution, the second accommodating groove is provided, and liquid leaking from the connection portion can flow into the second accommodating groove for temporary storage, thereby enabling the protective member to absorb or store more liquid, further reducing the risk of short-circuit-induced fire or ignition caused by high-voltage arcing due to spreading of liquid, and improving the reliability of the battery cell.

In an optional technical solution of the embodiments of this application, the case includes a side wall and a bottom wall, the side wall and the bottom wall are integrally formed, in the first direction, one end of the side wall is connected to the bottom wall, the other end of the side wall defines the opening, the main body portion surrounds an outer surface of the side wall, and the second accommodating groove is provided in the side wall.

In the foregoing technical solution, the second accommodating groove is provided in the side wall, and when the battery cell is used in the standard orientation, liquid leaking from the connection portion can flow into the second accommodating groove under gravity, thereby enabling the second accommodating groove to collect the liquid.

In an optional technical solution of the embodiments of this application, the main body portion includes a second absorbent layer, the second absorbent layer is connected to the first absorbent layer, and the second absorbent layer is configured to transport the liquid absorbed by the first absorbent layer to the second accommodating groove.

In the foregoing technical solution, the second absorbent layer can absorb liquid. Because the second absorbent layer is connected to the first absorbent layer, the liquid absorbed by the first absorbent layer can flow to the second absorbent layer. The liquid can be transported to the second accommodating groove from the second absorbent layer to be temporarily stored in the second accommodating groove. The second absorbent layer is disposed, thereby enabling the protective member to absorb or store more liquid, and enabling liquid transfer into the second accommodating groove.

In an optional technical solution of the embodiments of this application, the second absorbent layer covers the second accommodating groove.

In the foregoing technical solution, liquid leaking from the connection portion can be absorbed by the first absorbent layer, and flows to the second absorbent layer from the first absorbent layer. Because the second absorbent layer covers the second accommodating groove, the liquid in the second absorbent layer can drop into the second accommodating groove under gravity or can be transferred into the second accommodating groove in another manner (for example, an absorbent material is filled in the second accommodating groove to transfer the liquid absorbed by the second absorbent layer into the absorbent material).

In an optional technical solution of the embodiments of this application, the case includes a side wall and a bottom wall, the side wall and the bottom wall are integrally formed, in the first direction, one end of the side wall is connected to the bottom wall, the other end of the side wall defines the opening, the main body portion surrounds an outer surface of the side wall, and the second accommodating groove is provided in the bottom wall.

In the foregoing technical solution, the bottom wall generally has a large thickness, thereby making it relatively easy to provide the second accommodating groove, and the strength of the bottom wall is easily maintained after the second accommodating groove is provided. When the battery cell is used in the standard orientation, liquid leaking from the connection portion can flow into the second accommodating groove under gravity, thereby enabling the second accommodating groove to collect the liquid. When the battery cell is used in the inverted orientation, liquid leaking from the connection portion needs to travel upward to the bottom wall from the side wall and enter the second accommodating groove, which can significantly reduce the liquid leakage speed, thereby improving the reliability of the battery cell.

In an optional technical solution of the embodiments of this application, the main body portion includes a second absorbent layer, the protective member further includes a second flange portion, the second flange portion is connected in the first direction to an end of the main body portion opposite to the first flange portion, the second flange portion covers at least a part of the bottom wall, the second flange portion includes a third absorbent layer, the second absorbent layer connects the third absorbent layer and the first absorbent layer, and the second absorbent layer and the third absorbent layer are configured to transport the liquid absorbed by the first absorbent layer to the second accommodating groove.

In the foregoing technical solution, the third absorbent layer can absorb liquid. Because the second absorbent layer connects the first absorbent layer and the third absorbent layer, the liquid absorbed by the first absorbent layer can flow to the third absorbent layer through the second absorbent layer. The liquid can be transported to the second accommodating groove from the third absorbent layer to be temporarily stored in the second accommodating groove. The third absorbent layer is disposed, thereby enabling the protective member to absorb or store more liquid, and enabling liquid transfer into the second accommodating groove.

In an optional technical solution of the embodiments of this application, the third absorbent layer covers the second accommodating groove.

In the foregoing technical solution, liquid leaking from the connection portion can be absorbed by the first absorbent layer, and flows to the third absorbent layer from the first absorbent layer through the second absorbent layer. Because the third absorbent layer covers the second accommodating groove, the liquid in the third absorbent layer can drop into the second accommodating groove under gravity or can be transferred into the second accommodating groove in another manner (for example, an absorbent material is filled in the second accommodating groove to transfer the liquid absorbed by the second absorbent layer into the absorbent material).

In an optional technical solution of the embodiments of this application, the protective member is provided with a third adhesive layer, the third adhesive layer connects the third absorbent layer and the bottom wall, the third absorbent layer includes a third adhesive-free zone without the third adhesive layer, a position of the third adhesive-free zone corresponds to a position of the second accommodating groove, and an edge of the third adhesive-free zone extends beyond an edge of the second accommodating groove.

In the foregoing technical solution, the third absorbent layer and the bottom wall are bonded by the third adhesive layer such that the second flange portion and the bottom wall are conveniently connected, and manufacturing costs are low. However, the second adhesive layer may block liquid from flowing from the third absorbent layer to the second accommodating groove, thereby making it difficult for liquid to enter the second accommodating groove. Therefore, the third adhesive-free zone is disposed in a region of the third absorbent layer that corresponds to the second accommodating groove, and the third adhesive layer is not disposed in the third adhesive-free zone, thereby enabling the liquid in the third absorbent layer to flow to the second accommodating groove. The edge of the third adhesive-free zone extends beyond the edge of the second accommodating groove such that the third adhesive-free zone has a large range, thereby making it easier for the liquid in the third absorbent layer to enter the second accommodating groove.

In an optional technical solution of the embodiments of this application, in the second direction, a distance between the edge of the third adhesive-free zone and the edge of the second accommodating groove is D, satisfying D ≥ 2 mm; and the second direction is perpendicular to the first direction.

In the foregoing technical solution, the distance between the edge of the third adhesive-free zone and the edge of the second accommodating groove in the second direction is greater than or equal to 2 mm such that in one aspect, the third adhesive-free zone can have a large range, thereby making it easier for the liquid in the third absorbent layer to enter the second accommodating groove, and in another aspect, manufacturing is convenient.

In an optional technical solution of the embodiments of this application, an absorbent material is filled in the second accommodating groove.

In the foregoing technical solution, the absorbent material can absorb liquid, and the absorbent material is filled in the second accommodating groove, thereby making it easier to transfer the liquid in the second absorbent layer or the third absorbent layer into the second accommodating groove.

In an optional technical solution of the embodiments of this application, a material of the first absorbent layer has an absorption capacity for the liquid equivalent to at least three times a volume of the material.

In the foregoing technical solution, because an amount of unconstrained liquid within the battery cell is limited, when the material of the first absorbent layer has the absorption capacity for the liquid equivalent to at least three times the volume of the material, it can be ensured that leaking liquid is effectively absorbed.

In an optional technical solution of the embodiments of this application, a material of the first absorbent layer includes at least one of sponge, carbon fiber, and adsorbent resin.

In the foregoing technical solution, sponge, carbon fiber, and adsorbent resin all have a good liquid absorption capability, which facilitates effective absorption of liquid leaking from the connection portion, thereby improving the reliability of the battery cell.

In an optional technical solution of the embodiments of this application, the first flange portion includes a first insulating layer, and the first insulating layer is disposed on a side of the first absorbent layer that is away from the end cover.

In the foregoing technical solution, the first insulating layer is disposed on the side of the first absorbent layer that is away from the end cover such that in one aspect, the first insulating layer can provide insulation to reduce the risk of a short circuit due to contact between another component and the first absorbent layer, and in another aspect, the presence of the first insulating layer significantly reduces leakage of the liquid absorbed by the first absorbent layer, thereby improving the reliability of the battery cell.

In an optional technical solution of the embodiments of this application, the first flange portion includes a fourth adhesive layer, and the fourth adhesive layer connects the first absorbent layer and the first insulating layer.

In the foregoing technical solution, the first absorbent layer and the first insulating layer are bonded by the fourth adhesive layer such that the first absorbent layer and the first insulating layer are tightly connected, thereby reducing the risk of delamination of the first insulating layer from the first absorbent layer. In addition, the fourth adhesive layer can further restrict the liquid absorbed by the first absorbent layer from flowing to the first insulating layer, thereby ensuring the insulation of the first insulating layer.

In an optional technical solution of the embodiments of this application, the main body portion includes the second absorbent layer, and the second absorbent layer is connected to the first absorbent layer.

In the foregoing technical solution, the second absorbent layer can absorb liquid. Because the second absorbent layer is connected to the first absorbent layer, the liquid absorbed by the first absorbent layer can flow to the second absorbent layer. The second absorbent layer is provided, thereby enabling the protective member to absorb or store more liquid, further reducing the risk of short-circuit-induced fire or ignition caused by high-voltage arcing due to spreading of liquid, and improving the reliability of the battery cell.

In an optional technical solution of the embodiments of this application, the case includes the side wall and the bottom wall, the side wall and the bottom wall are integrally formed, in the first direction, one end of the side wall is connected to the bottom wall, the other end of the side wall defines the opening, and the main body portion surrounds the outer surface of the side wall; and the protective member includes the second flange portion, the second flange portion is connected to the end of the main body portion opposite to the first flange portion in the first direction, and the second flange portion covers at least a part of the bottom wall.

In the foregoing technical solution, the second flange portion is formed to cover the bottom wall, thereby enabling the main body portion to cover the entire outer surface of the side wall, reducing the risk of damage to the side wall, and improving the reliability of the battery cell. In addition, the second flange portion covers at least a part of the bottom wall, thereby reducing the risk of damage to the bottom wall, and improving the reliability of the battery cell. When the second flange portion covers a part of the bottom wall, the second flange portion defines an accommodating cavity, and an adhesive can be filled in the accommodating cavity, thereby bonding the bottom wall to fix the battery cell.

In an optional technical solution of the embodiments of this application, the main body portion includes the second absorbent layer, the second flange portion includes the third absorbent layer, and the second absorbent layer connects the third absorbent layer and the first absorbent layer.

In the foregoing technical solution, both the second absorbent layer and the third absorbent layer can absorb liquid. Because the second absorbent layer connects the first absorbent layer and the third absorbent layer, the liquid absorbed by the first absorbent layer can flow to the third absorbent layer through the second absorbent layer. The second absorbent layer and the third absorbent layer are provided, thereby enabling the protective member to absorb or store more liquid, further reducing the risk of short-circuit-induced fire or ignition caused by high-voltage arcing due to spreading of liquid, and improving the reliability of the battery cell.

In an optional technical solution of the embodiments of this application, the first absorbent layer, the second absorbent layer, and the third absorbent layer are integrally formed.

In the foregoing technical solution, the first absorbent layer, the second absorbent layer, and the third absorbent layer are integrally formed such that the protective member has enhanced integrity and is less prone to liquid leakage.

In an optional technical solution of the embodiments of this application, the first flange portion covers the entire surface of the connection portion.

In the foregoing technical solution, the protective member covers the entire surface of the connection portion. In this way, liquid leaking from any position of the connection portion can be blocked by the protective member, thereby reducing the liquid leakage speed, and improving the reliability of the battery cell to a certain extent.

In an optional technical solution of the embodiments of this application, the protective member is an insulating film.

In the foregoing technical solution, the insulating film surrounds the outer surface of the case such that the case can be insulated and isolated from other components, thereby reducing the risk of a short circuit due to contact between the case and another component. In addition, the insulating film blocks at least a part of the connection portion such that liquid leakage from the connection portion can be prevented to a certain extent, thereby reducing the liquid leakage speed, and improving the reliability of the battery cell to a certain extent.

In an optional technical solution of the embodiments of this application, the battery cell further includes an electrode assembly, the electrode assembly is accommodated in the housing, and the end cover is configured to support the electrode assembly in a gravity direction.

In the foregoing technical solution, the end cover supports the electrode assembly in a gravity direction, which corresponds to a scenario in which the battery cell is used in the inverted orientation. When the battery cell is used in the inverted orientation, the risk of liquid leakage from the connection portion is increased, thereby enabling the protective member to provide better protection.

According to a second aspect, an embodiment of this application further provides a battery. The battery includes the foregoing battery cell.

In an optional technical solution of the embodiments of this application, the battery further includes a box, the battery cell is disposed in the box, and the end cover is disposed on a side of the battery cell that is close to a bottom wall of the box.

In the foregoing technical solution, the end cover is disposed on a side of the battery cell that is close to a bottom wall of the box, i.e., the battery cell is inverted in the box.

According to a third aspect, an embodiment of this application further provides a power consuming device. The power consuming device includes the foregoing battery. The battery is configured to supply electric energy to the power consuming device.

### BRIEF DESCRIPTION OF THE DRAWINGS

To describe the technical solutions in the embodiments of this application more clearly, the following briefly introduces the accompanying drawings required for the embodiments. It should be understood that the following accompanying drawings show merely some embodiments of this application and therefore should not be considered as a limitation to the scope. A person of ordinary skill in the art may still derive other related drawings from these accompanying drawings without creative efforts.
FIG. 1 is a schematic diagram of a structure of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic diagram of a structure of a battery cell in the standard orientation according to some embodiments of this application;
FIG. 5 is a schematic top view of a battery cell according to some embodiments of this application;
FIG. 6 is a cross-sectional view along a position D-D in FIG. 5;
FIG. 7 is a schematic top view of a battery cell according to some other embodiments of this application;
FIG. 8 is a cross-sectional view along a position E-E in FIG. 7;
FIG. 9 is a schematic top view of a battery cell according to yet other embodiments of this application;
FIG. 10 is a cross-sectional view along a position F-F in FIG. 9;
FIG. 11 is a schematic diagram of a structure of a battery cell in the inverted orientation according to still other embodiments of this application;
FIG. 12 is a schematic top view of a battery cell according to still other embodiments of this application; and
FIG. 13 is a cross-sectional view along a position G-G in FIG. 12.

In the drawings: 10-box; 11-first part; 12-second part; 20-battery cell; 21-protective member; 211-main body portion; 2111-second absorbent layer; 21111-second adhesive-free zone; 2112-second adhesive layer; 2113-second insulating layer; 2114-fifth adhesive layer; 212-first flange portion; 2121-first absorbent layer; 21211-first adhesive-free zone; 2122-first adhesive layer; 2123-first insulating layer; 2124-fourth adhesive layer; 213-second flange portion; 2131-third absorbent layer; 21311-third adhesive-free zone; 2132-third adhesive layer; 2133-third insulating layer; 2134-sixth adhesive layer; 214-second accommodating groove; 22-housing; 221-case; 2211-bottom wall; 2212-side wall; 222-end cover; 2221-first accommodating groove; 223-connection portion; 23-electrode assembly; 24-electrode terminal; 100-battery; 200-controller; 300-motor; and 1000-vehicle.

### DETAILED DESCRIPTION

To make the objectives, technical solutions, and advantages of embodiments of this application clearer, the following clearly describes the technical solutions in embodiments of this application with reference to the accompanying drawings in embodiments of this application. It is clear that the described embodiments are merely some rather than all of embodiments of this application. All other embodiments obtained by a person of ordinary skill in the art based on the embodiments of this application without creative efforts fall within the protection scope of this application.

Unless otherwise defined, all technical and scientific terms used in this application have same meanings as commonly understood by a person skilled in the technical field of this application. The terms used in the filed specification in this application are merely for an objective of describing specific embodiments, and are not intended to limit this application. The terms "comprise", "include" and any variations thereof in the specification and claims of this application and in the above descriptions of the accompanying drawings are intended to cover non-exclusive inclusion. The terms such as "first" and "second" in the specification and claims of this application or the foregoing accompanying drawings are only used to distinguish between different objects, but are not used to describe a specific order or a primary and secondary relationship.

Reference to "an embodiment" in this application means that a particular feature, structure or characteristic described in combination with the embodiment may be included in at least one embodiment of this application. The phrase shown in various locations in the specification may not necessarily refer to a same embodiment, and is not an independent or alternative embodiment exclusive from another embodiment.

In the descriptions of this application, it needs to be noted that unless otherwise expressly specified and defined, "mounted", "connected", "connection", and "attached" should be understood in a broad sense, for example, fixedly connected, detachably connected, or integrally connected; or connected directly or through an intermediate, or two elements communicated internally. A person of ordinary skill in the art may understand specific meanings of the foregoing terms in this application according to specific cases.

The term "and/or" in this application describes only an association relationship for describing associated objects and represents that three relationships may exist. For example, A and/or B may represent the following three cases: Only A exists, both A and B exist, and only B exists. In addition, a character "/" in this application generally indicates an "or" relationship between contextually associated objects.

In the embodiments of this application, identical reference numerals designate identical components. For conciseness, detailed descriptions of identical components are omitted across different embodiments. It is to be understood that the dimensions including thicknesses, lengths, and widths of components illustrated in the embodiments of this application as well as dimensions such as the overall thickness, length, and width of the integrated device shown in the accompanying drawings are provided for exemplary purposes only and shall not be construed as limiting the scope of this application.

The term "a plurality of" as used in this application means two or more (inclusive of two).

The battery cell in this application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in the embodiments of this application. The battery cell may be cylindrical, flat-shaped, cuboid-shaped, or of another shape, which is also not limited in the embodiments of this application. Generally, battery cells are classified into three types based on encapsulating methods: columnar battery cells, prismatic battery cells, and pouch battery cells, which are also not limited in the embodiments of this application.

A battery mentioned in embodiments of this application is a single physical module including one or more battery cells to provide a higher voltage and a higher capacity. For example, the battery provided in this application may include a battery module, a battery pack, or the like. The battery generally includes a box for packaging the one or more battery cells. The box can prevent liquid or other foreign objects from affecting the charging or discharging of the battery cells.

The battery cell includes an electrode assembly and electrolyte solution, and the electrode assembly includes a positive electrode plate, a negative electrode plate, and a separator. The battery cell works mainly relying on the movement of metal ions between the positive electrode plate and the negative electrode plate. The positive electrode plate includes a positive electrode current collector and a positive electrode active substance layer, the positive electrode active substance layer is coated to a surface of the positive electrode current collector, the positive electrode current collector not coated with the positive electrode active substance layer protrudes from the positive electrode current collector already coated with the positive electrode active substance layer, and the positive electrode current collector not coated with the positive electrode active substance layer is used as a positive electrode tab. By using the lithium-ion battery as an example, a material of the positive electrode current collector may be aluminum, and a positive electrode active substance may be lithium cobalt oxide, lithium iron phosphate, ternary lithium, lithium manganese oxide, or the like. The negative electrode plate includes a negative electrode current collector and a negative electrode active substance layer, a surface of the negative electrode current collector is coated with the negative electrode active substance layer, the negative electrode current collector not coated with the negative electrode active substance layer protrudes from the negative electrode current collector already coated with the negative electrode active substance layer, and the negative electrode current collector not coated with the negative electrode active substance layer is used as a negative electrode tab. A material of the negative electrode current collector may be copper, and the negative electrode active substance may be carbon, silicon, or the like. To ensure that no fusing occurs when a large current passes through, a plurality of positive electrode tabs are provided and stacked, and a plurality of negative electrode tabs are provided and stacked. A material of the separator may be polypropylene (PP), polyethylene (PE), or the like. In addition, the electrode assembly may be either of a wound structure or a stacked structure, which is not defined in the embodiments of this application.

Currently, from the perspective of development of the market situation, battery applications have proliferated. The batteries are used in energy storage power systems such as water power plants, fire power plants, wind power plants, and solar power plants, and are also widely used in electric mobility devices such as electric bicycles, electric motorcycles, electric vehicles, as well as in military equipment, aerospace, and other fields. With continuous expansion of application fields of batteries, market demands for batteries are also expanding.

The advancement of battery technology necessitates a holistic consideration of multifaceted design factors, for example, performance parameters such as battery service life, energy density, discharge capacity, and charge/discharge rates. In addition, the reliability of batteries further needs to be taken into consideration. However, batteries have suboptimal reliability at present.

The inventors find through research that a battery cell includes a case and an end cover. An opening is provided in the case. The end cover is connected to the case and closes the opening. Electrolyte solution is prone to leakage from a connection position between the case and the end cover, and leaking electrolyte solution is prone to causing a short circuit in the battery cell, or when flowing to a high-voltage region, electrolyte solution is prone to ignition by high-voltage arcing, causing a safety accident. Leakage of electrolyte solution from the connection position between the case and the end cover becomes significantly exacerbated when the battery cell is used in the inverted orientation, resulting in suboptimal reliability of batteries.

In view of this, embodiments of this application provide a battery cell. The battery cell includes a housing and a protective member. The housing includes a case and an end cover. An opening is formed in at least one end of the case in a first direction, and the end cover closes the opening. The end cover is connected to the case to form a connection portion. The protective member includes a main body portion and a first flange portion. The main body portion surrounds an outer surface of the case. In the first direction, the first flange portion is connected to an end of the main body portion, and the first flange portion is disposed on the end cover and covers at least a part of the connection portion.

The case and the end cover define an accommodating space, and the accommodating space is configured for accommodating an electrode assembly of the battery cell. The opening is formed in at least one end of the case in the first direction, to allow entry of the electrode assembly into the case through the opening. After the electrode assembly enters the case, the end cover closes the opening to isolate the electrode assembly from an external environment. The main body portion of the protective member surrounds the outer surface of the case such that the case can be protected, thereby reducing the risk of damage to the case. The first flange portion covers at least a part of the connection portion such that liquid leakage from the connection portion can be prevented to a certain extent, thereby reducing the liquid leakage speed, and improving the reliability of the battery cell to a certain extent.

The technical solution described in embodiments of this application is applicable to a battery and a power consuming device using a battery.

The power consuming device may be a vehicle, a mobile phone, a portable apparatus, a laptop, a ship, a spacecraft, an electronic toy, an electric tool, etc. The spacecraft includes an airplane, a rocket, a space shuttle, a spaceship, and the like; the electronic toy includes a fixed or mobile electronic toy, for example, a game console, an electric vehicle toy, an electric ship toy, and an electric aircraft toy; and the electric tool includes a metal-cutting power tool, a grinding power tool, an assembly power tool and a railway power tool, for example, an electric drill, an electric grinder, an electric wrench, an electric screwdriver, an electric hammer, an electric impact drill, a concrete vibrator, and an electric planer. The embodiments of this application do not impose specific limitations on the foregoing power consuming device.

For ease of description in the following embodiments, an example in which the power consuming device is a vehicle 1000 is used for description.

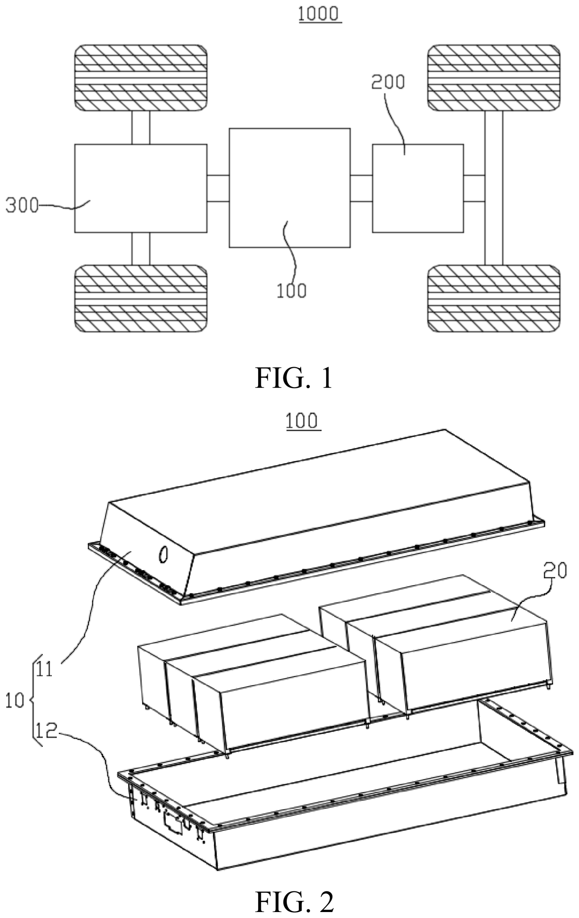

FIG. 1 is a schematic diagram of a structure of a vehicle 1000 according to some embodiments of this application. The vehicle 1000 may be a fuel powered vehicle, a gas powered vehicle, or a new energy vehicle. The new energy vehicle may be a pure electric vehicle, a hybrid electric vehicle, or an extended range vehicle, etc. The inner part of the vehicle 1000 is provided with a battery 100. The battery 100 may be disposed at the bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of this application, the battery 100 can not only serve as a power supply for operating the vehicle 1000, but can also serve as a power supply for driving the vehicle 1000, in place of or partially in place of fuel or natural gas, to provide driving power for the vehicle 1000.

FIG. 2 is an exploded view of a battery 100 according to some embodiments of this application. The battery 100 includes a box 10 and battery cells 20, where the battery cells 20 are accommodated in the box 10. The box 10 is configured to provide an accommodating space for the battery cells 20. The box 10 may use a variety of structures. In some embodiments, the box 10 may include a first part 11 and a second part 12, the first part 11 and the second part 12 cover each other, and the first part 11 and the second part 12 jointly define the accommodating space for accommodating the battery cells 20. The second part 12 may be a hollow structure with an opening at one end, the first part 11 may be a plate-like structure, and the first part 11 covers an opening side of the second part 12, so that the first part 11 and the second part 12 jointly define the accommodating space. Alternatively, the first part 11 and the second part 12 each may be a hollow structure with an opening on one side, and an opening side of the first part 11 covers an opening side of the second part 12. Certainly, the box 10 formed by the first part 11 and the second part 12 may be in various shapes, such as a cylinder and a cuboid.

In the battery 100, there may be a plurality of battery cells 20, and the plurality of battery cells 20 can be connected in series, parallel, or series-parallel. Series-parallel connection means that both series connection and parallel connection exist among the plurality of battery cells 20. The plurality of battery cells 20 may be directly connected in series, parallel, or series-parallel together, and then the whole formed by the plurality of battery cells 20 may be accommodated in the box 10. Certainly, the battery 100 may also be in the form of a battery module formed by the plurality of battery cells 20 that are first connected in series, parallel, or series-parallel. A plurality of battery modules are then connected in series, parallel, or series-parallel to form a whole and accommodated in the box 10. The battery 100 may also include other structures, for example, the battery 100 may also include a bus component for achieving the electrical connection between the plurality of battery cells 20.

Each battery cell 20 may be a secondary battery cell or a primary battery cell; or may be a lithium-sulfur battery cell, a sodium-ion battery cell, or a magnesium-ion battery cell, but is not limited thereto. The battery cell 20 may be cylindrical, flat-shaped, cuboid-shaped, or of another shape.

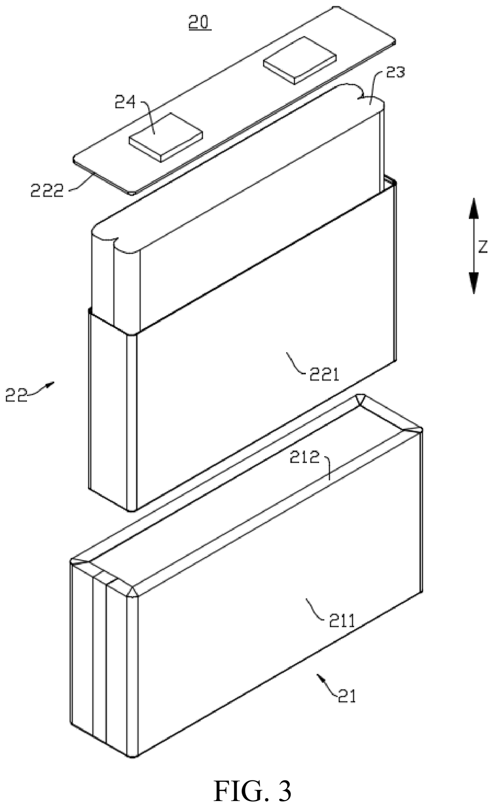

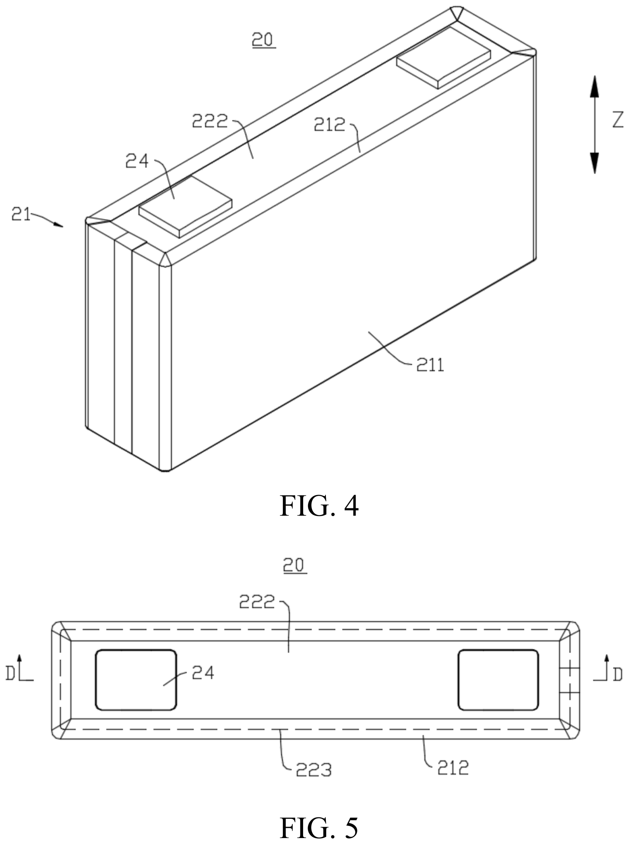

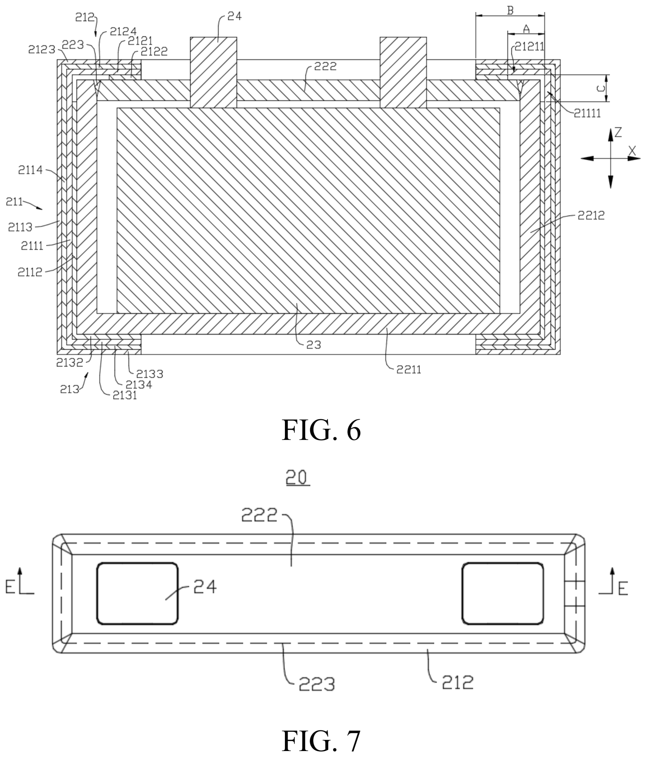

FIG. 3 is an exploded view of a battery cell 20 according to some embodiments of this application. FIG. 4 is a schematic diagram of a structure of a battery cell 20 in the standard orientation according to some embodiments of this application. FIG. 5 is a schematic top view of a battery cell 20 according to some embodiments of this application. FIG. 6 is a cross-sectional view along a position D-D in FIG. 5. Embodiments of this application provide a battery cell 20. The battery cell 20 includes a housing 22 and a protective member 21. The housing 22 includes a case 221 and an end cover 222. An opening is formed in at least one end of the case 221 in a first direction, and the end cover 222 closes the opening. The end cover 222 is connected to the case 221 to form a connection portion 223. The protective member 21 includes a main body portion 211 and a first flange portion 212. The main body portion 211 surrounds an outer surface of the case 221. In the first direction, the first flange portion 212 is connected to an end of the main body portion 211, and the first flange portion 212 is disposed on the end cover 222 and covers at least a part of the connection portion 223.

The battery cell 20 is the minimal unit of the battery 100.

Referring to FIG. 6, the first direction may be a Z direction in the figure.

The housing 22 includes the end cover 222 and the case 221. The case 221 is provided with an accommodating space with an opening at one end. The accommodating space is configured for accommodating an electrode assembly 23. The end cover 222 is connected to the case 221 and closes the opening.

The end cover 222 is a component that covers the opening of the case 221 to isolate an internal environment of the battery cell 20 from an external environment. A shape of the end cover 222 is not limited and may be adapted to a shape of the case 221 to fit the case 221. Optionally, the end cover 222 may be made of a material with specified hardness and strength (for example, aluminum alloy), so that the end cover 222 is less likely to deform under extrusion and collision, thereby enabling the battery cell 20 to have a higher structural strength and enhanced safety performance. The end cover 222 may also be made of various materials, such as copper, iron, aluminum, stainless steel, aluminum alloy, and plastic, which are not particularly limited in the embodiments of this application. In some embodiments, the battery cell 20 further includes an insulating member. The insulating member is disposed on an inner side of the end cover 222. The insulating member can be configured to isolate electrical connection parts in the case 221 from the end cover 222, thereby reducing the risk of a short circuit. For example, the insulating member may be made of plastic, rubber, or the like.

The case 221 is an assembly configured to form an internal environment of the battery cells 20 together with the end cover 222, where the formed internal environment may be configured to accommodate the electrode assembly 23, electrolyte solution, and other components. The case 221 and the end cover 222 may be separate components, the opening may be provided in the case 221, and at the opening, the end cover 222 covers the opening to form the internal environment of the battery cell 20. Without limitation, the end cover 222 and the case 221 may also be integrally formed. Specifically, the end cover 222 and the case 221 may form a shared joint surface before other components are arranged inside the case, and then the end cover 222 covers the case 221 when the inside of the case 221 needs to be enclosed. The case 221 may be of various shapes and sizes, such as a rectangular shape, a cylindrical shape, and a hexagonal prism shape. Specifically, the shape of the case 221 may be determined based on a specific shape and size of the electrode assembly 23. The case 221 may be made of various materials, such as copper, iron, aluminum, stainless steel, aluminum alloy, and plastic, which are not particularly limited in the embodiments of this application.

The connection portion 223 is formed by connecting the end cover 222 and the case 221. For example, when the end cover 222 is welded to the case 221, the connection portion 223 is a weld seam. FIG. 5 indicates the location of the connection portion 223 using a dashed line.

The main body portion 211 is a part of the protective member 21 that surrounds the outer surface of the case 221. The outer surface of the case 221 is a surface of the case 221 that is away from the accommodating space. An inner surface of the case 221 is a surface of the case 221 that faces the accommodating space. The main body portion 211 may surround the entire outer surface of the case 221, or may surround a part of the outer surface of the case 221. Optionally, the case 221 has an outer peripheral surface disposed around the opening, and the main body portion 211 surrounds the entire outer peripheral surface of the case 221.

The first flange portion 212 is a flange part on the protective member 21 that folds toward the end cover 222. In the first direction, the first flange portion 212 is connected to an end of the main body portion 211 that is close to the end cover 222, and after being folded toward the end cover 222 with respect to the main body portion 211, the first flange portion 212 covers at least a part of the connection portion 223. The first flange portion 212 may cover a part of the connection portion 223, or may cover the entire connection portion 223.

"The first flange portion 212 is disposed on the end cover 222" means that after the first flange portion 212 is folded over the end cover 222, in the first direction, projections of the first flange portion 212 and the end cover 222 partially overlap.

That the protective member 21 covers the connection portion 223 means that the protective member 21 blocks an outer surface of the connection portion 223. When the end cover 222 is welded to the case 221, the protective member 21 blocks an outer surface of the weld seam.

The case 221 and the end cover 222 define the accommodating space, and the accommodating space is configured for accommodating the electrode assembly 23 of the battery cell 20. The opening is formed in at least one end of the case 221 in the first direction, to allow entry of the electrode assembly 23 into the case 221 through the opening. After the electrode assembly 23 enters the case 221, the end cover 222 closes the opening to isolate the electrode assembly 23 from an external environment. The main body portion 211 of the protective member 21 surrounds the outer surface of the case 221 such that the case 221 can be protected, thereby reducing the risk of damage to the case 221. The first flange portion 212 covers at least a part of the connection portion 223 such that liquid leakage from the connection portion 223 can be prevented to a certain extent, thereby reducing the liquid leakage speed, and improving the reliability of the battery cell 20 to a certain extent.

Referring to FIG. 5 and FIG. 6, in some embodiments, the first flange portion 212 includes a first absorbent layer 2121, and the first absorbent layer 2121 is configured to absorb liquid.

The first absorbent layer 2121 has a liquid absorption capability to absorb liquid leaking from the connection portion 223. Optionally, a material of the first absorbent layer 2121 includes an absorbent material.

The liquid is not limited to liquid in the battery cell 20, and may be alternatively liquid in the box 10. In the embodiments of this application, the liquid may be at least one of electrolyte solution, a liquid additive, and a condensate.

The first absorbent layer 2121 can absorb liquid leaking from the connection portion 223, to mitigate the risk of short-circuit-induced fire or ignition caused by high-voltage arcing due to spreading of liquid leaking from the connection portion 223, thereby improving the reliability of the battery cell 20.

Referring to FIG. 5 and FIG. 6, in some embodiments, the protective member 21 is provided with a first adhesive layer 2122, and the first adhesive layer 2122 connects the first absorbent layer 2121 and the end cover 222.

The first adhesive layer 2122 provides adhesive bonding and can bond the first absorbent layer 2121 to the end cover 222. An adhesive material may be coated between the first absorbent layer 2121 and the end cover 222, and the first adhesive layer 2122 may be formed after the adhesive material is dried.

The first absorbent layer 2121 and the end cover 222 are bonded by the first adhesive layer 2122 such that the first absorbent layer 2121 and the end cover 222 are conveniently connected and manufacturing costs are low.

Referring to FIG. 5 and FIG. 6, in some embodiments, the first absorbent layer 2121 includes a first adhesive-free zone 21211 without the first adhesive layer 2122. In the first direction, a projection of the first adhesive-free zone 21211 covers at least a part of the connection portion 223.

The first adhesive-free zone 21211 is a region on the first absorbent layer 2121 that is without the first adhesive layer 2122. A position of the first adhesive-free zone 21211 corresponds to a position of the connection portion 223. In other words, the first adhesive layer 2122 may be disposed to avoid a part of the connection portion 223, or may be disposed to avoid the entire connection portion 223. Optionally, in the first direction, projections of the first adhesive layer 2122 and the connection portion 223 do not overlap.

The first adhesive layer 2122 may block liquid from flowing to the first absorbent layer 2121, affecting liquid absorption in the first absorbent layer 2121. Therefore, the first adhesive-free zone 21211 is disposed in a region of the first absorbent layer 2121 that corresponds to the connection portion 223, and the first adhesive layer 2122 is not disposed in the first adhesive-free zone 21211, thereby enabling liquid leaking from the connection portion 223 to flow to the first absorbent layer 2121 to be absorbed by the first absorbent layer 2121.

Referring to FIG. 5 and FIG. 6, in some embodiments, the first adhesive-free zone 21211 is connected to the main body portion 211. A width of the first adhesive-free zone 21211 is A, and a width of the first absorbent layer 2121 is B, satisfying 0.1B ≤ A ≤ 0.6B.

The width of the first adhesive-free zone 21211 is a shortest distance between a position at which the first adhesive-free zone 21211 is connected to the main body portion 211 and the first adhesive layer 2122 in a thickness direction of the main body portion 211. For ease of measurement, the protective member 21 may be removed from the housing 22, and a distance between a bend line position at which the first flange portion 212 is connected to the main body portion 211 and the first adhesive layer 2122 is measured. Alternatively, after the protective member 21 is removed from the housing 22, the position of the first adhesive-free zone 21211 without the first adhesive layer 2122 can be observed, thereby allowing measurement.

The width of the first absorbent layer 2121 is a distance between a surface of the main body portion 211 that faces the first absorbent layer 2121 and an end of the first absorbent layer 2121 that is away from the main body portion 211 in the thickness direction of the main body portion 211. For ease of measurement, the protective member 21 may be removed from the housing 22, and the position of the first absorbent layer 2121 can be observed, thereby allowing measurement.

The thickness direction of the main body portion 211 may be an X direction in FIG. 6.

A value of the width of the first adhesive-free zone 21211 may be A= 0.1B, 0.15B, 0.2B, 0.25B, 0.3B, 0.4B, 0.45B, 0.5B, 0.55B, 0.6B, or the like.

The width of the first adhesive-free zone 21211 is set to 0.1 to 0.6 times a width of the first flange portion 212, to allow liquid leaking from the connection portion 223 to flow to the first absorbent layer 2121 without affecting the bonding of the first flange portion 212. When A < 0.1B, the width of the first adhesive-free zone 21211 is small, and the first adhesive layer 2122 blocks liquid effectively. As a result, liquid leaking from the connection portion 223 is obstructed from flowing to the first absorbent layer 2121 and fails to be absorbed by the first absorbent layer 2121, and the risk of short-circuit-induced fire or ignition caused by high-voltage arcing due to spreading of liquid is increased. When A > 0.6B, the width of the first adhesive-free zone 21211 is excessively large, and as a result a width of the first adhesive layer 2122 is small. The connection strength between the first absorbent layer 2121 and the end cover 222 is low, and the first flange portion 212 is prone to detachment from the end cover 222.

Referring to FIG. 5 and FIG. 6, in some embodiments, the protective member 21 is provided with a second adhesive layer 2112, and the second adhesive layer 2112 connects the main body portion 211 and the case 221.

The second adhesive layer 2112 provides adhesive bonding and can bond the main body portion 211 to the case 221. An adhesive material may be coated between the main body portion 211 and the case 221, and the second adhesive layer 2112 may be formed after the adhesive material is dried.

The main body portion 211 and the case 221 are bonded by the second adhesive layer 2112 such that the main body portion 211 and the case 221 are conveniently connected, and manufacturing costs are low.

Referring to FIG. 5 and FIG. 6, in some embodiments, the main body portion 211 includes a second adhesive-free zone 21111 without the second adhesive layer 2112. In a second direction, a projection of the second adhesive-free zone 21111 covers at least a part of the connection portion 223. The second direction is perpendicular to the first direction.

The second direction is perpendicular to the first direction, and referring to FIG. 6, the second direction may be the X direction in the figure.

The second adhesive-free zone 21111 is a region on the main body portion 211 that is without the second adhesive layer 2112. In the second direction, the projection of the second adhesive-free zone 21111 covers at least a part of the connection portion 223. Optionally, the second adhesive-free zone 21111 is disposed around an outer side of the connection portion 223.

During manufacturing, because an adhesive is fluid, when bonding the main body portion 211 and the case 221, the adhesive tends to flow downward under gravity to form the second adhesive-free zone 21111 on the main body portion 211. The second adhesive layer 2112 is not disposed on the second adhesive-free zone 21111 such that in one aspect manufacturing can be simplified, and in another aspect, because the projection of the second adhesive-free zone 21111 covers at least a part of the connection portion 223, liquid leaking from the connection portion 223 can flow between the second adhesive-free zone 21111 and the case 221 for temporary storage, thereby enabling the protective member 21 to absorb or store more liquid, further reducing the risk of short-circuit-induced fire or ignition caused by high-voltage arcing due to spreading of liquid, and improving the reliability of the battery cell 20.

Referring to FIG. 5 and FIG. 6, in some embodiments, the second adhesive-free zone 21111 is connected to the first adhesive-free zone 21211. In the first direction, a width of the second adhesive-free zone 21111 is C, satisfying 2 mm ≤ C ≤ 10 mm.

The width of the second adhesive-free zone 21111 is a spacing between the second adhesive layer 2112 and the first adhesive-free zone 21211 in the first direction. For ease of measurement, the protective member 21 may be removed from the housing 22, and a distance between a bend line position at which the first flange portion 212 is connected to the main body portion 211 and the second adhesive layer 2112 is measured. Alternatively, after the protective member 21 is removed from the housing 22, the position of the second adhesive-free zone 21111 without the second adhesive layer 2112 can be observed, thereby allowing measurement.

A value of the width of the second adhesive-free zone 21111 may be C = 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, or the like.

The width of the second adhesive-free zone 21111 is set to 2 to 10 mm such that a large space is provided between the second adhesive-free zone 21111 and the case 221 to store liquid temporarily without affecting the bonding of the main body portion 211. When C < 2 mm, the width of the second adhesive-free zone 21111 is small, and the space between the second adhesive-free zone 21111 and the case 221 is small and an amount of liquid that can be stored temporarily is small. When C > 10 mm, the width of the second adhesive-free zone 21111 is excessively large, and as a result a width of the second adhesive layer 2112 is small. The connection strength between the main body portion 211 and the case 221 is low, and the main body portion 211 is prone to detachment from the case 221.

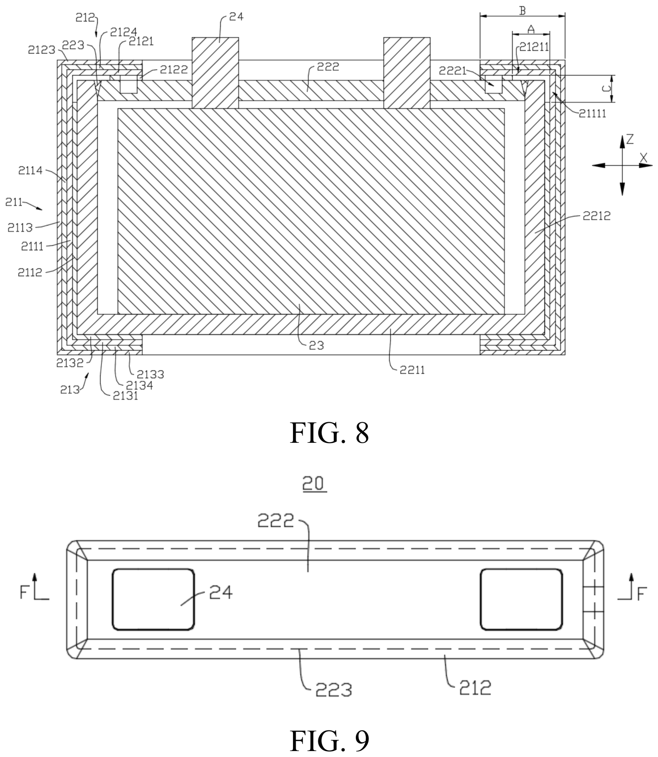

FIG. 7 is a schematic top view of a battery cell 20 according to some other embodiments of this application. FIG. 8 is a cross-sectional view along a position E-E in FIG. 7. In some embodiments, a first accommodating groove 2221 is provided in an outer surface of the end cover 222, and the first accommodating groove 2221 is configured to accommodate the liquid.

The first accommodating groove 2221 is a groove structure provided in the outer surface of the end cover 222. The first accommodating groove 2221 is recessed toward the inside of the housing 22 from the outer surface of the end cover 222. The first accommodating groove 2221 can accommodate liquid to store the liquid temporarily.

The first accommodating groove 2221 may be an annular groove extending in a circumferential direction of the end cover 222. The first accommodating groove 2221 may be disposed around an inner side of the connection portion 223.

A cross-sectional shape of the first accommodating groove 2221 is not limited. The cross-sectional shape of the first accommodating groove 2221 may be a trapezoid, a rectangle, a triangle, or the like.

A quantity of the first accommodating grooves 2221 is not limited. One, two, three or more first accommodating grooves 2221 may be provided. The plurality of first accommodating grooves 2221 are disposed at intervals on the end cover 222.

The first accommodating groove 2221 is provided, and liquid leaking from the connection portion 223 can flow into the first accommodating groove 2221 for temporary storage, thereby enabling the protective member 21 to absorb or store more liquid, further reducing the risk of short-circuit-induced fire or ignition caused by high-voltage arcing due to spreading of liquid, and improving the reliability of the battery cell 20.

Referring to FIG. 7 and FIG. 8, in some embodiments, the first absorbent layer 2121 covers the first accommodating groove 2221.

The first absorbent layer 2121 blocks an opening end of the first accommodating groove 2221. In the first direction, a projection of the first accommodating groove 2221 falls within a projection range of the first absorbent layer 2121.

Liquid leaking from the connection portion 223 can be absorbed by the first absorbent layer 2121. As the first absorbent layer 2121 is gradually saturated, the liquid absorbed by the first absorbent layer 2121 can drop into the first accommodating groove 2221 under gravity or can be transferred into the first accommodating groove 2221 in another manner (for example, an absorbent material is filled in the first accommodating groove 2221 to transfer the liquid absorbed by the first absorbent layer 2121 into the absorbent material).

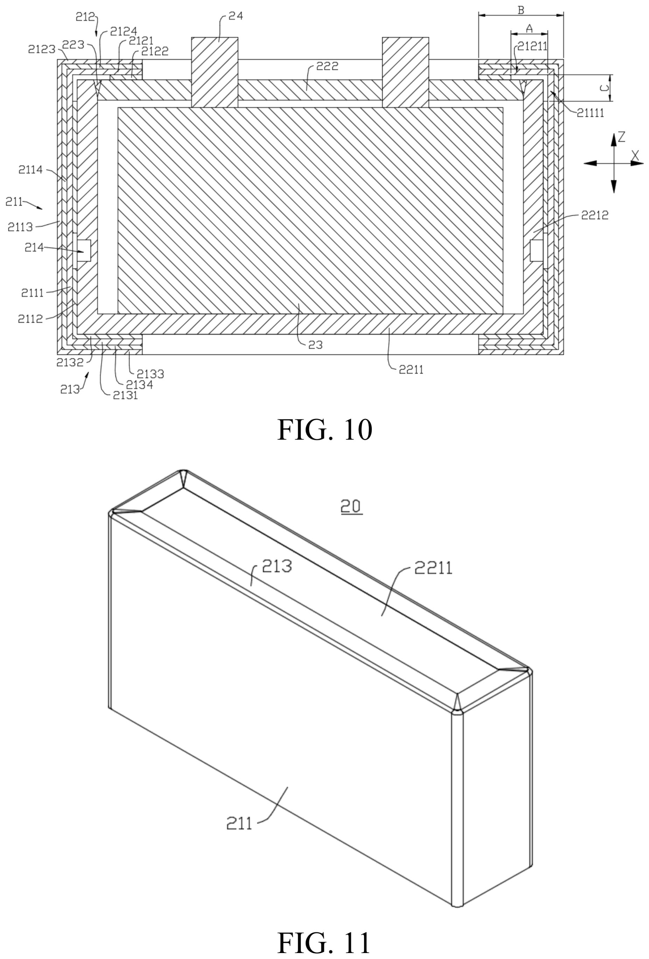

FIG. 9 is a schematic top view of a battery cell 20 according to yet other embodiments of this application. FIG. 10 is a cross-sectional view along a position F-F in FIG. 9. In some embodiments, a second accommodating groove 214 is provided in the outer surface of the case 221, and the second accommodating groove 214 is configured to accommodate the liquid.

The second accommodating groove 214 is a groove structure provided in the outer surface of the case 221. The second accommodating groove 214 is recessed toward the inside of the housing 22 from the outer surface of the case 221. The second accommodating groove 214 can accommodate liquid to store the liquid temporarily.

The second accommodating groove 214 may be an annular groove extending in a circumferential direction of the case 221, or may be a non-closed groove extending along a non-closed trajectory.

A cross-sectional shape of the second accommodating groove 214 is not limited. The cross-sectional shape of the second accommodating groove 214 may be a trapezoid, a rectangle, a triangle, or the like.

A quantity of second accommodating grooves 214 is not limited. One, two, three or more second accommodating grooves 214 may be provided. The plurality of second accommodating grooves 214 are disposed at intervals on the case 221.

The second accommodating groove 214 is provided, and liquid leaking from the connection portion 223 can flow into the second accommodating groove 214 for temporary storage, thereby enabling the protective member 21 to absorb or store more liquid, further reducing the risk of short-circuit-induced fire or ignition caused by high-voltage arcing due to spreading of liquid, and improving the reliability of the battery cell 20.

In some embodiments, the case 221 includes a side wall 2212 and a bottom wall 2211, and the side wall 2212 and the bottom wall 2211 are integrally formed. In the first direction, one end of the side wall 2212 is connected to the bottom wall 2211, and the other end of the side wall 2212 defines the opening. The main body portion 211 surrounds an outer surface of the side wall 2212, and the second accommodating groove 214 is provided in the side wall 2212.

When the case 221 is provided, the side wall 2212 and the bottom wall 2211 are an integrally formed structure. The side wall 2212 and the bottom wall 2211 may be integrally formed by stamping, or may be integrally formed by casting. In the first direction, one end of the side wall 2212 is connected to the bottom wall 2211, the other end of the side wall 2212 is connected to the end cover 222 to form the connection portion 223, and the bottom wall 2211 and the end cover 222 are disposed opposite to each other.

The main body portion 211 may surround the entire outer surface of the side wall 2212, or may surround only a part of the outer surface of the side wall 2212. In the embodiment shown in FIG. 10, the main body portion 211 surrounds the entire outer surface of the side wall 2212. The main body portion 211 surrounds the outer surface of the side wall 2212 such that the side wall 2212 can be protected, thereby reducing the risk of damage to the side wall 2212.

The second accommodating groove 214 is provided in the side wall 2212, and the second accommodating groove 214 is recessed from the outer surface of the side wall 2212 toward an inner surface of the side wall 2212. The outer surface of the side wall 2212 is a surface of the side wall 2212 that is away from the inside of the housing 22, and the inner surface of the side wall 2212 is a surface of the side wall 2212 that faces the inside of the housing 22.

The second accommodating groove 214 is provided in the side wall 2212, and when the battery cell 20 is used in the standard orientation, liquid leaking from the connection portion 223 can flow into the second accommodating groove 214 under gravity, thereby enabling the second accommodating groove 214 to collect the liquid.

Referring to FIG. 9 and FIG. 10, in some embodiments, the main body portion 211 includes a second absorbent layer 2111, and the second absorbent layer 2111 is connected to the first absorbent layer 2121. The second absorbent layer 2111 is configured to transport the liquid absorbed by the first absorbent layer 2121 to the second accommodating groove 214.

The second absorbent layer 2111 also has a liquid absorption capability. A material of the second absorbent layer 2111 includes an absorbent material. In the first direction, the first absorbent layer 2121 is connected to an end of the second absorbent layer 2111.

"The second absorbent layer 2111 is configured to transport the liquid absorbed by the first absorbent layer 2121 to the second accommodating groove 214" means that because both the first absorbent layer 2121 and the second absorbent layer 2111 have a liquid absorption capability and the first absorbent layer 2121 is connected to the second absorbent layer 2111, after entering the first absorbent layer 2121, liquid leaking from the connection portion 223 can flow to the second absorbent layer 2111, and enter the second accommodating groove 214 from the second absorbent layer 2111.

The second absorbent layer 2111 can absorb liquid. Because the second absorbent layer 2111 is connected to the first absorbent layer 2121, the liquid absorbed by the first absorbent layer 2121 can flow to the second absorbent layer 2111. The liquid can be transported to the second accommodating groove 214 from the second absorbent layer 2111 to be temporarily stored in the second accommodating groove 214. The second absorbent layer 2111 is disposed, thereby enabling the protective member 21 to absorb or store more liquid, and enabling liquid transfer into the second accommodating groove 214.

Referring to FIG. 9 and FIG. 10, in some embodiments, the second absorbent layer 2111 covers the second accommodating groove 214.

The second absorbent layer 2111 blocks an opening end of the second accommodating groove 214. In the second direction, a projection of the second accommodating groove 214 falls within a projection range of the second absorbent layer 2111.

Liquid leaking from the connection portion 223 can be absorbed by the first absorbent layer 2121, and flows to the second absorbent layer 2111 from the first absorbent layer 2121. Because the second absorbent layer 2111 covers the second accommodating groove 214, the liquid in the second absorbent layer 2111 can drop into the second accommodating groove 214 under gravity or can be transferred into the second accommodating groove 214 in another manner (for example, an absorbent material is filled in the second accommodating groove 214 to transfer the liquid absorbed by the second absorbent layer 2111 into the absorbent material).

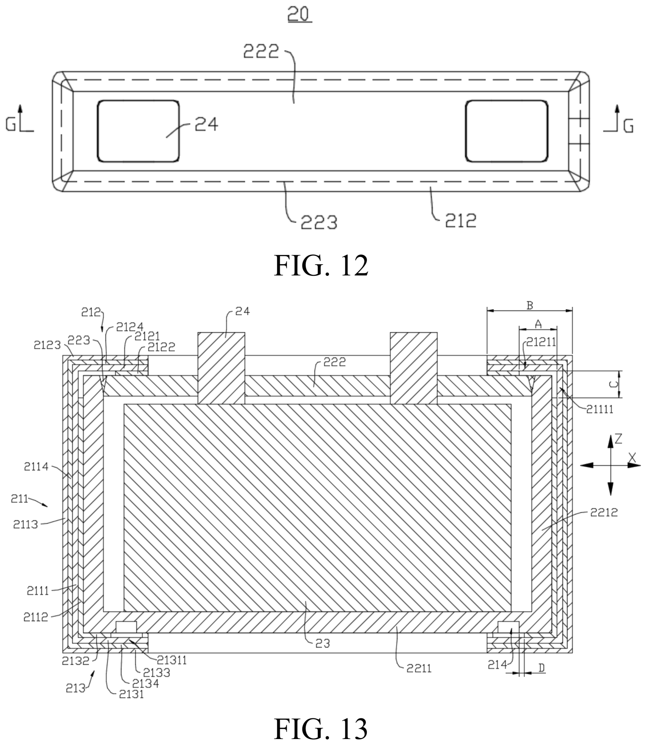

FIG. 11 is a schematic diagram of a structure of a battery cell 20 in the inverted orientation according to still other embodiments of this application. FIG. 12 is a schematic top view of a battery cell 20 according to still other embodiments of this application. FIG. 13 is a cross-sectional view along a position G-G in FIG. 12. In some embodiments, the case 221 includes a side wall 2212 and a bottom wall 2211, and the side wall 2212 and the bottom wall 2211 are integrally formed. In the first direction, one end of the side wall 2212 is connected to the bottom wall 2211, and the other end of the side wall 2212 defines the opening. The main body portion 211 surrounds an outer surface of the side wall 2212, and the second accommodating groove 214 is provided in the bottom wall 2211.

The second accommodating groove 214 is provided in the bottom wall 2211, and the second accommodating groove 214 is recessed from an outer surface of the bottom wall 2211 toward an inner surface of the bottom wall 2211. The outer surface of the bottom wall 2211 is a surface of the bottom wall 2211 that is away from the inside of the housing 22, and the inner surface of the bottom wall 2211 is a surface of the bottom wall 2211 that faces the inside of the housing 22.

The bottom wall 2211 generally has a large thickness, thereby making it relatively easy to provide the second accommodating groove 214, and the strength of the bottom wall 2211 is easily maintained after the second accommodating groove 214 is provided. When the battery cell 20 is used in the standard orientation, liquid leaking from the connection portion 223 can flow into the second accommodating groove 214 under gravity, thereby enabling the second accommodating groove 214 to collect the liquid. When the battery cell 20 is used in the inverted orientation, liquid leaking from the connection portion 223 needs to travel upward to the bottom wall 2211 from the side wall 2212 and enter the second accommodating groove 214, which can significantly reduce the liquid leakage speed, thereby improving the reliability of the battery cell 20.

A plurality of second accommodating grooves 214 may be provided. The plurality of second accommodating grooves 214 may all be disposed on the bottom wall 2211, or the plurality of second accommodating grooves 214 may all be disposed on the side wall 2212. Certainly, some second accommodating grooves 214 may be disposed on the side wall 2212, and some other second accommodating grooves 214 may be disposed on the bottom wall 2211.

It needs to be noted that when the first accommodating groove 2221 is disposed on the end cover 222, the second accommodating groove 214 may also be disposed on the case 221.

Referring to FIG. 11, FIG. 12, and FIG. 13, in some embodiments, the main body portion 211 includes the second absorbent layer 2111. The protective member 21 further includes a second flange portion 213, the second flange portion 213 is connected to an end of the main body portion 211 opposite to the first flange portion 212 in the first direction, and the second flange portion 213 covers at least a part of the bottom wall 2211. The second flange portion 213 includes a third absorbent layer 2131, and the second absorbent layer 2111 connects the third absorbent layer 2131 and the first absorbent layer 2121. The second absorbent layer 2111 and the third absorbent layer 2131 are configured to transport the liquid absorbed by the first absorbent layer 2121 to the second accommodating groove 214.

The second flange portion 213 is a flange part on the protective member 21 that folds toward the bottom wall 2211. The second flange portion 213 is connected to an end of the main body portion 211 that is close to the bottom wall 2211. In the first direction, the first flange portion 212 and the second flange portion 213 are connected to two ends of the main body portion 211, and the first flange portion 212 and the second flange portion 213 are disposed opposite to each other.

After being folded toward the bottom wall 2211 with respect to the main body portion 211, the second flange portion 213 may cover a part of the bottom wall 2211, or may cover the entire bottom wall 2211.

The third absorbent layer 2131 also has a liquid absorption capability. A material of the third absorbent layer 2131 includes an absorbent material. In the first direction, the first absorbent layer 2121 and the third absorbent layer 2131 are connected to two ends of the second absorbent layer 2111, and the first absorbent layer 2121 and the third absorbent layer 2131 are disposed opposite to each other.

"The second absorbent layer 2111 and the third absorbent layer 2131 are configured to transport the liquid absorbed by the first absorbent layer 2121 to the second accommodating groove 214" means that because the first absorbent layer 2121, the second absorbent layer 2111, and the third absorbent layer 2131 all have a liquid absorption capability, and the first absorbent layer 2121, the second absorbent layer 2111, and the third absorbent layer 2131 are connected, after entering the first absorbent layer 2121, liquid leaking from the connection portion 223 can flow to the second absorbent layer 2111, enter the third absorbent layer 2131 from the second absorbent layer 2111, and finally enter the second accommodating groove 214 from the third absorbent layer 2131.

The third absorbent layer 2131 can absorb liquid. Because the second absorbent layer 2111 connects the first absorbent layer 2121 and the third absorbent layer 2131, the liquid absorbed by the first absorbent layer 2121 can flow to the third absorbent layer 2131 through the second absorbent layer 2111. The liquid can be transported to the second accommodating groove 214 from the third absorbent layer 2131 to be temporarily stored in the second accommodating groove 214. The third absorbent layer 2131 is disposed, thereby enabling the protective member 21 to absorb or store more liquid, and enabling liquid transfer into the second accommodating groove 214.

Referring to FIG. 11, FIG. 12, and FIG. 13, in some embodiments, the third absorbent layer 2131 covers the second accommodating groove 214.

The third absorbent layer 2131 blocks the opening end of the second accommodating groove 214. In the first direction, the projection of the second accommodating groove 214 falls within a projection range of the third absorbent layer 2131.

Liquid leaking from the connection portion 223 can be absorbed by the first absorbent layer 2121, and flows to the third absorbent layer 2131 from the first absorbent layer 2121 through the second absorbent layer 2111. Because the third absorbent layer 2131 covers the second accommodating groove 214, the liquid in the third absorbent layer 2131 can drop into the second accommodating groove 214 under gravity or can be transferred into the second accommodating groove 214 in another manner (for example, an absorbent material is filled in the second accommodating groove 214 to transfer the liquid absorbed by the second absorbent layer 2111 into the absorbent material).

Referring to FIG. 11, FIG. 12, and FIG. 13, in some embodiments, the protective member 21 is provided with a third adhesive layer 2132, and the third adhesive layer 2132 connects the third absorbent layer 2131 and the bottom wall 2211. The third absorbent layer 2131 includes a third adhesive-free zone 21311 without the third adhesive layer 2132, and a position of the third adhesive-free zone 21311 corresponds to a position of the second accommodating groove 214. An edge of the third adhesive-free zone 21311 extends beyond an edge of the second accommodating groove 214.

The third adhesive layer 2132 provides adhesive bonding and can bond the third absorbent layer 2131 to the bottom wall 2211. An adhesive material may be coated between the third absorbent layer 2131 and the bottom wall 2211, and the third adhesive layer 2132 may be formed after the adhesive material is dried.

The third adhesive-free zone 21311 is a region on the third absorbent layer 2131 that is without the third adhesive layer 2132. In the first direction, a projection of the third adhesive-free zone 21311 covers the second accommodating groove 214.

"An edge of the third adhesive-free zone 21311 extends beyond an edge of the second accommodating groove 214" means that an area of the third adhesive-free zone 21311 is larger than an area of the second accommodating groove 214. In this way, in the first direction, an edge of the projection of the third adhesive-free zone 21311 is disposed around an outer side of an edge of the projection of the second accommodating groove 214.

The third absorbent layer 2131 and the bottom wall 2211 are bonded by the third adhesive layer 2132 such that the second flange portion 213 and the bottom wall 2211 are conveniently connected, and manufacturing costs are low. However, the second adhesive layer 2112 may block liquid from flowing from the third absorbent layer 2131 to the second accommodating groove 214, thereby making it difficult for liquid to enter the second accommodating groove 214. Therefore, the third adhesive-free zone 21311 is disposed in a region of the third absorbent layer 2131 that corresponds to the second accommodating groove 214, and the third adhesive layer 2132 is not disposed in the third adhesive-free zone 21311, thereby enabling the liquid in the third absorbent layer 2131 to flow to the second accommodating groove 214. The edge of the third adhesive-free zone 21311 extends beyond the edge of the second accommodating groove 214 such that the third adhesive-free zone 21311 has a large range, thereby making it easier for the liquid in the third absorbent layer 2131 to enter the second accommodating groove 214.

In some other embodiments, in the first direction, the projection of the third adhesive-free zone 21311 falls within the second accommodating groove 214.

In yet other embodiments, in the first direction, the projection of the third adhesive-free zone 21311 and the projection of the second accommodating groove 214 coincide.

It needs to be noted that when the end cover 222 is provided with the first accommodating groove 2221, a fourth adhesive-free zone may be disposed at a position on the first absorbent layer 2121 that corresponds to the first accommodating groove 2221, to allow liquid to enter the first accommodating groove 2221 from the first absorbent layer 2121. An area of the fourth adhesive-free zone may be larger than an opening area of the first accommodating groove 2221, or may be smaller than the opening area of the first accommodating groove 2221, or may be equal to the opening area of the first accommodating groove 2221. When the side wall 2212 is provided with the second accommodating groove 214, a fifth adhesive-free zone may be disposed at a position on the second absorbent layer 2111 that corresponds to the second accommodating groove 214, to allow liquid to enter the second accommodating groove 214 from the second absorbent layer 2111. An area of the fifth adhesive-free zone may be larger than an opening area of the second accommodating groove 214, or may be smaller than the opening area of the second accommodating groove 214, or may be equal to the opening area of the second accommodating groove 214.

Referring to FIG. 11, FIG. 12, and FIG. 13, in some embodiments, in the second direction, a distance between the edge of the third adhesive-free zone 21311 and the edge of the second accommodating groove 214 is D, satisfying D ≥ 2 mm. The second direction is perpendicular to the first direction.

D denotes the distance between the edge of the third adhesive-free zone 21311 and the edge of the second accommodating groove 214 in the second direction.

A value of the distance between the edge of the third adhesive-free zone 21311 and the edge of the second accommodating groove 214 in the second direction may be: D = 2 mm, 2.1 mm, 2.2 mm, 2.3 mm, 2.4 mm, 2.5 mm, 2.6 mm, 2.7 mm, 2.8 mm, 2.9 mm, 3 mm, 3.5 mm, 4 mm, or the like.

The distance between the edge of the third adhesive-free zone 21311 and the edge of the second accommodating groove 214 in the second direction is greater than or equal to 2 mm such that in one aspect, the third adhesive-free zone 21311 can have a large range, thereby making it easier for the liquid in the third absorbent layer 2131 to enter the second accommodating groove 214, and in another aspect, manufacturing is convenient.

It needs to be noted that the limitation on the distance between the edge of the third adhesive-free zone 21311 and the edge of the second accommodating groove 214 also applies to an edge of the fourth adhesive-free zone and an edge of the first accommodating groove 2221, and also applies to an edge of the fifth adhesive-free zone and the edge of the second accommodating groove 214 (in this case, the second accommodating groove 214 is provided in the side wall 2212).

In some embodiments, an absorbent material is filled in the second accommodating groove 214.

The absorbent material includes at least one of sponge, carbon fiber, and adsorbent resin.

The absorbent material filled in the second accommodating groove 214 may be in contact with the second absorbent layer 2111 and/or the third absorbent layer 2131, to allow liquid in the second absorbent layer 2111 and/or the third absorbent layer 2131 to flow to the absorbent material in the second accommodating groove 214.

The absorbent material can absorb liquid, and the absorbent material is filled in the second accommodating groove 214, thereby making it easier to transfer the liquid in the second absorbent layer 2111 or the third absorbent layer 2131 into the second accommodating groove 214.

Similarly, the absorbent material may also be filled in the first accommodating groove 2221, thereby making it easier to transfer the liquid in the first absorbent layer 2121 into the first accommodating groove 2221.

In some embodiments, the absorbent material has an absorption capacity for the liquid equivalent to at least three times a volume of the material.

When the absorbent material has an absorption capacity for the liquid equivalent to at least three times a volume of the material, it indicates that the absorbent material has a strong liquid absorption and storage capability, thereby mitigating the risk of short-circuit-induced fire or ignition caused by high-voltage arcing due to spreading of liquid leaking from the connection portion 223, and improving the reliability of the battery cell 20.

In some embodiments, the material of the first absorbent layer 2121 has an absorption capacity for the liquid equivalent to at least three times a volume of the material.

Because an amount of unconstrained liquid within the battery cell 20 is limited, when the material of the first absorbent layer 2121 has the absorption capacity for the liquid equivalent to at least three times the volume of the material, it can be ensured that leaking liquid is effectively absorbed.

In some embodiments, the material of the first absorbent layer 2121 includes at least one of sponge, carbon fiber, and adsorbent resin.

Sponge, carbon fiber, and adsorbent resin all have a good liquid absorption capability, which facilitates effective absorption of liquid leaking from the connection portion 223, thereby improving the reliability of the battery cell 20.

Referring to FIG. 12 and FIG. 13, in some embodiments, the first flange portion 212 includes a first insulating layer 2123, and the first insulating layer 2123 is disposed on a side of the first absorbent layer 2121 that is away from the end cover 222.

The first insulating layer 2123 has an insulating property, and the first insulating layer 2123 is disposed on the side of the first absorbent layer 2121 that is away from the end cover 222. The first insulating layer 2123 is farther away from the connection portion 223 than the first absorbent layer 2121, and the first insulating layer 2123 covers the first absorbent layer 2121 such that the risk of a short circuit due to contact between another component and the first absorbent layer 2121 can be reduced.

In some embodiments, an area of the first insulating layer 2123 is larger than or equal to an area of the first absorbent layer 2121 such that the first insulating layer 2123 can effectively isolate the first absorbent layer 2121 from other components. The first insulating layer 2123 may be made of plastic, rubber, or the like. In some embodiments, the first insulating layer 2123 is made of polyethylene terephthalate.

Certainly, the area of the first insulating layer 2123 may be alternatively smaller than the area of the first absorbent layer 2121, thereby reducing the costs of the battery cell 20.

The first insulating layer 2123 is disposed on the side of the first absorbent layer 2121 that is away from the end cover 222 such that in one aspect, the first insulating layer 2123 can provide insulation to reduce the risk of a short circuit due to contact between another component and the first absorbent layer 2121, and in another aspect, the presence of the first insulating layer 2123 significantly reduces leakage of the liquid absorbed by the first absorbent layer 2121, thereby improving the reliability of the battery cell 20.

Referring to FIG. 12 and FIG. 13, in some embodiments, the first flange portion 212 includes a fourth adhesive layer 2124, and the fourth adhesive layer 2124 connects the first absorbent layer 2121 and the first insulating layer 2123.

The fourth adhesive layer 2124 provides adhesive bonding and can bond the first absorbent layer 2121 to the first insulating layer 2123. An adhesive material may be coated between the first absorbent layer 2121 and the first insulating layer 2123, and the fourth adhesive layer 2124 may be formed after the adhesive material is dried.

The first absorbent layer 2121 and the first insulating layer 2123 are bonded by the fourth adhesive layer 2124 such that the first absorbent layer 2121 and the first insulating layer 2123 are tightly connected, thereby reducing the risk of delamination of the first insulating layer 2123 from the first absorbent layer 2121. In addition, the fourth adhesive layer 2124 can further restrict the liquid absorbed by the first absorbent layer 2121 from flowing to the first insulating layer 2123, thereby ensuring the insulation of the first insulating layer 2123.

Referring to FIG. 12 and FIG. 13, in some embodiments, the main body portion 211 includes the second absorbent layer 2111, and the second absorbent layer 2111 is connected to the first absorbent layer 2121.

The second absorbent layer 2111 also has a liquid absorption capability. A material of the second absorbent layer 2111 includes an absorbent material. In the first direction, the first absorbent layer 2121 is connected to an end of the second absorbent layer 2111. Because both the first absorbent layer 2121 and the second absorbent layer 2111 have a liquid absorption capability and the first absorbent layer 2121 is connected to the second absorbent layer 2111, after entering the first absorbent layer 2121, liquid leaking from the connection portion 223 can flow to the second absorbent layer 2111, and enter the second accommodating groove 214 from the second absorbent layer 2111.

The second absorbent layer 2111 can absorb liquid. Because the second absorbent layer 2111 is connected to the first absorbent layer 2121, the liquid absorbed by the first absorbent layer 2121 can flow to the second absorbent layer 2111. The second absorbent layer 2111 is provided, thereby enabling the protective member 21 to absorb or store more liquid, further reducing the risk of short-circuit-induced fire or ignition caused by high-voltage arcing due to spreading of liquid, and improving the reliability of the battery cell 20.

Referring to FIG. 12 and FIG. 13, in some embodiments, the main body portion 211 includes a second insulating layer 2113, and the second insulating layer 2113 is disposed on a side of the second absorbent layer 2111 that is away from the case 221. The second insulating layer 2113 is connected to the first insulating layer 2123.

The second insulating layer 2113 has an insulating property, and the second insulating layer 2113 is disposed on the side of the second absorbent layer 2111 that is away from the case 221 (specifically the side wall 2212 of the case 221 in FIG. 13). The second insulating layer 2113 is farther away from the case 221 (specifically the side wall 2212 of the case 221 in FIG. 13) than the second absorbent layer 2111, and the second insulating layer 2113 covers the second absorbent layer 2111 such that the risk of a short circuit due to contact between another component and the second absorbent layer 2111 can be reduced.

In some embodiments, an area of the second insulating layer 2113 is larger than or equal to an area of the second absorbent layer 2111 such that the second insulating layer 2113 can effectively isolate the second absorbent layer 2111 from other components. The second insulating layer 2113 may be made of plastic, rubber, or the like. In some embodiments, the second insulating layer 2113 is made of polyethylene terephthalate.

Certainly, the area of the second insulating layer 2113 may be alternatively smaller than the area of the second absorbent layer 2111, thereby reducing the costs of the battery cell 20.

The second insulating layer 2113 is disposed on the side of the second absorbent layer 2111 that is away from the case 221 such that in one aspect, the second insulating layer 2113 can provide insulation to reduce the risk of a short circuit due to contact between another component and the second absorbent layer 2111, and in another aspect, the presence of the second insulating layer 2113 significantly reduces leakage of the liquid absorbed by the second absorbent layer 2111, thereby improving the reliability of the battery cell 20.

Referring to FIG. 12 and FIG. 13, in some embodiments, the main body portion 211 includes a fifth adhesive layer 2114, and the fifth adhesive layer 2114 connects the second absorbent layer 2111 and the second insulating layer 2113.

The fifth adhesive layer 2114 provides adhesive bonding and can bond the second absorbent layer 2111 to the second insulating layer 2113. An adhesive material may be coated between the second absorbent layer 2111 and the second insulating layer 2113, and the fifth adhesive layer 2114 may be formed after the adhesive material is dried.

The second absorbent layer 2111 and the second insulating layer 2113 are bonded by the fifth adhesive layer 2114 such that the second absorbent layer 2111 and the second insulating layer 2113 are tightly connected, thereby reducing the risk of delamination of the second insulating layer 2113 from the second absorbent layer 2111. In addition, the fifth adhesive layer 2114 can further restrict the liquid absorbed by the second absorbent layer 2111 from flowing to the second insulating layer 2113, thereby ensuring the insulation of the second insulating layer 2113.

Referring to FIG. 12 and FIG. 13, in some embodiments, the case 221 includes the side wall 2212 and the bottom wall 2211, and the side wall 2212 and the bottom wall 2211 are integrally formed. In the first direction, one end of the side wall 2212 is connected to the bottom wall 2211, and the other end of the side wall 2212 defines the opening. The main body portion 211 surrounds the outer surface of the side wall 2212. The protective member 21 includes the second flange portion 213, and the second flange portion 213 is connected to an end of the main body portion 211 opposite to the first flange portion 212 in the first direction. The second flange portion 213 covers at least a part of the bottom wall 2211.

When the case 221 is provided, the side wall 2212 and the bottom wall 2211 are an integrally formed structure. The side wall 2212 and the bottom wall 2211 may be integrally formed by stamping, or may be integrally formed by casting. In the first direction, one end of the side wall 2212 is connected to the bottom wall 2211, the other end of the side wall 2212 is connected to the end cover 222 to form the connection portion 223, and the bottom wall 2211 and the end cover 222 are disposed opposite to each other.

The main body portion 211 may surround the entire outer surface of the side wall 2212, or may surround only a part of the outer surface of the side wall 2212. In the embodiment shown in FIG. 10, the main body portion 211 surrounds the entire outer surface of the side wall 2212. The main body portion 211 surrounds the outer surface of the side wall 2212 such that the side wall 2212 can be protected, thereby reducing the risk of damage to the side wall 2212.

The second flange portion 213 is a flange part on the protective member 21 that folds toward the bottom wall 2211. The second flange portion 213 is connected to an end of the main body portion 211 that is close to the bottom wall 2211. In the first direction, the first flange portion 212 and the second flange portion 213 are connected to two ends of the main body portion 211, and the first flange portion 212 and the second flange portion 213 are disposed opposite to each other.

After being folded toward the bottom wall 2211 with respect to the main body portion 211, the second flange portion 213 may cover a part of the bottom wall 2211, or may cover the entire bottom wall 2211.

The second flange portion 213 is formed to cover the bottom wall 2211, thereby enabling the main body portion 211 to cover the entire outer surface of the side wall 2212, reducing the risk of damage to the side wall 2212, and improving the reliability of the battery cell 20. In addition, the second flange portion 213 covers at least a part of the bottom wall 2211, thereby reducing the risk of damage to the bottom wall 2211, and improving the reliability of the battery cell 20. When the second flange portion 213 covers a part of the bottom wall 2211, the second flange portion 213 defines an accommodating cavity, and an adhesive can be filled in the accommodating cavity, thereby bonding the bottom wall 2211 to fix the battery cell 20.

In some embodiments, the main body portion 211 includes the second absorbent layer 2111, the second flange portion 213 includes the third absorbent layer 2131, and the second absorbent layer 2111 connects the third absorbent layer 2131 and the first absorbent layer 2121.

Because the first absorbent layer 2121, the second absorbent layer 2111, and the third absorbent layer 2131 all have a liquid absorption capability, and the first absorbent layer 2121, the second absorbent layer 2111, and the third absorbent layer 2131 are connected, after entering the first absorbent layer 2121, liquid leaking from the connection portion 223 can flow to the second absorbent layer 2111, enter the third absorbent layer 2131 from the second absorbent layer 2111, and finally enter the second accommodating groove 214 from the third absorbent layer 2131.

Both the second absorbent layer 2111 and the third absorbent layer 2131 can absorb liquid. Because the second absorbent layer 2111 connects the first absorbent layer 2121 and the third absorbent layer 2131, the liquid absorbed by the first absorbent layer 2121 can flow to the third absorbent layer 2131 through the second absorbent layer 2111. The second absorbent layer 2111 and the third absorbent layer 2131 are provided, thereby enabling the protective member 21 to absorb or store more liquid, further reducing the risk of short-circuit-induced fire or ignition caused by high-voltage arcing due to spreading of liquid, and improving the reliability of the battery cell 20.

Referring to FIG. 12 and FIG. 13, in some embodiments, the second flange portion 213 includes a third insulating layer 2133, and the third insulating layer 2133 is disposed on a side of the third absorbent layer 2131 that is away from the bottom wall 2211. The second insulating layer 2113 connects the first insulating layer 2123 and the third insulating layer 2133.

The third insulating layer 2133 has an insulating property, and the third insulating layer 2133 is disposed on the side of the third absorbent layer 2131 that is away from the bottom wall 2211. The third insulating layer 2133 is farther away from the bottom wall 2211 than the third absorbent layer 2131, and the third insulating layer 2133 covers the third absorbent layer 2131 such that the risk of a short circuit due to contact between another component and the third absorbent layer 2131 can be reduced.

In some embodiments, an area of the third insulating layer 2133 is larger than or equal to an area of the third absorbent layer 2131 such that the third insulating layer 2133 can effectively isolate the third absorbent layer 2131 from other components. The third insulating layer 2133 may be made of plastic, rubber, or the like. In some embodiments, the third insulating layer 2133 is made of polyethylene terephthalate.

Certainly, the area of the third insulating layer 2133 may be alternatively smaller than the area of the third absorbent layer 2131, thereby reducing the costs of the battery cell 20.

The third insulating layer 2133 is disposed on the side of the third absorbent layer 2131 that is away from the case 221 such that in one aspect, the third insulating layer 2133 can provide insulation to reduce the risk of a short circuit due to contact between another component and the third absorbent layer 2131, and in another aspect, the presence of the third insulating layer 2133 significantly reduces leakage of the liquid absorbed by the third absorbent layer 2131, thereby improving the reliability of the battery cell 20.

Referring to FIG. 12 and FIG. 13, in some embodiments, the second flange portion 213 includes a sixth adhesive layer 2134, and the sixth adhesive layer 2134 connects the third absorbent layer 2131 and the third insulating layer 2133.

The sixth adhesive layer 2134 provides adhesive bonding and can bond the third absorbent layer 2131 to the third insulating layer 2133. An adhesive material may be coated between the third absorbent layer 2131 and the third insulating layer 2133, and the sixth adhesive layer 2134 may be formed after the adhesive material is dried.

The third absorbent layer 2131 and the third insulating layer 2133 are bonded by the sixth adhesive layer 2134 such that the third absorbent layer 2131 and the third insulating layer 2133 are tightly connected, thereby reducing the risk of delamination of the third insulating layer 2133 from the third absorbent layer 2131. In addition, the sixth adhesive layer 2134 can further restrict the liquid absorbed by the third absorbent layer 2131 from flowing to the third insulating layer 2133, thereby ensuring the insulation of the third insulating layer 2133.

In some embodiments, the first absorbent layer 2121, the second absorbent layer 2111, and the third absorbent layer 2131 are integrally formed.

When the protective member 21 is provided, the first absorbent layer 2121, the second absorbent layer 2111, and the third absorbent layer 2131 are an integrally formed structure.

The first absorbent layer 2121, the second absorbent layer 2111, and the third absorbent layer 2131 are integrally formed such that the protective member 21 has enhanced integrity and is less prone to liquid leakage.

In some embodiments, the first insulating layer 2123, the second insulating layer 2113, and the third insulating layer 2133 are integrally formed. When the protective member 21 is provided, the first insulating layer 2123, the second insulating layer 2113, and the third insulating layer 2133 are an integrally formed structure.

Referring to FIG. 12 and FIG. 13, in some embodiments, the first flange portion 212 covers the entire connection portion 223.

The protective member 21 covers the entire surface of the connection portion 223. In this way, liquid leaking from any position of the connection portion 223 can be blocked by the protective member 21, thereby reducing the liquid leakage speed, and improving the reliability of the battery cell 20 to a certain extent.

In some embodiments, the protective member 21 is an insulating film.

The insulating film may be a blue polyimide film or a Mylar film.

The insulating film surrounds the outer surface of the case 221 such that the case 221 can be insulated and isolated from other components, thereby reducing the risk of a short circuit due to contact between the case 221 and another component. In addition, the insulating film blocks at least a part of the connection portion 223 such that liquid leakage from the connection portion 223 can be prevented to a certain extent, thereby reducing the liquid leakage speed, and improving the reliability of the battery cell 20 to a certain extent.

In some other embodiments, the protective member 21 is an insulating sheet. The insulating sheet is made of a material with an insulating property. The insulating sheet may be made of plastic, rubber, or the like. In some embodiments, the insulating sheet is made of polyethylene terephthalate. The protective member 21 provides insulation and can insulate and isolate the housing 22 from other components, thereby avoiding a short circuit due to contact between another component and the housing 22.

Referring to FIG. 12 and FIG. 13, in some embodiments, the battery cell 20 further includes the electrode assembly 23, and the electrode assembly 23 is accommodated in the housing 22. The end cover 222 is configured to support the electrode assembly 23 in a gravity direction.

The electrode assembly 23 is a component in the battery cell 20 that undergoes electrochemical reactions. The housing 22 may include one or more electrode assemblies 23. The electrode assembly 23 is mainly formed by winding or laminating a positive electrode plate and a negative electrode plate, and a separator is generally provided between the positive electrode plate and the negative electrode plate. Parts of the positive electrode plate and the negative electrode plate with active substances constitute a body of the electrode assembly 23, while parts of the positive electrode plate and the negative electrode plate without active substances separately constitute a tab. The positive electrode tab and the negative electrode tab may be located at one end of the body together or at two ends of the body separately. During charging and discharging of the battery 100, a positive electrode active substance and a negative electrode active substance react with electrolyte solution.

The end cover 222 supports the electrode assembly 23 in the gravity direction. In this case, the end cover 222 is disposed at the bottom of the housing 22.

The end cover 222 supports the electrode assembly 23 in the gravity direction, which corresponds to a scenario in which the battery cell 20 is used in the inverted orientation. When the battery cell 20 is used in the inverted orientation, the risk of liquid leakage from the connection portion 223 is increased, thereby enabling the protective member 21 to provide better protection.

In some embodiments, the battery cell 20 further includes the electrode assembly 23 and an electrode terminal 24, and the electrode assembly 23 is accommodated in the housing 22. The electrode assembly 23 is electrically connected to the electrode terminal 24. The end cover 222 is configured to support the electrode assembly 23 in the gravity direction, and the electrode terminal 24 is disposed on the end cover 222. The first flange portion 212 is disposed around the electrode terminal 24.

In some other embodiments, an avoidance hole is opened in the first flange portion 212, and the electrode terminal 24 extends out of the first flange portion 212 through the avoidance hole.

In yet other embodiments, the case 221 includes the side wall 2212 and the bottom wall 2211 that are integrally formed, and the side wall 2212 is disposed around the bottom wall 2211. In the first direction, one end of the side wall 2212 is connected to the bottom wall 2211, and the other end of the side wall 2212 defines the opening. The side wall 2212 and the bottom wall 2211 jointly define the accommodating space. The battery cell 20 further includes the electrode assembly 23 and an electrode terminal 24, and the electrode assembly 23 is accommodated in the accommodating space. The electrode assembly 23 is electrically connected to the electrode terminal 24. The end cover 222 closes the opening, the end cover 222 is configured to support the electrode assembly 23 in the gravity direction, and the electrode terminal 24 is disposed on the bottom wall 2211.

When the case 221 is provided, the side wall 2212 and the bottom wall 2211 are an integrally formed structure. The side wall 2212 and the bottom wall 2211 may be integrally formed by stamping, or may be integrally formed by casting. One end of the side wall 2212 is connected to the bottom wall 2211, and the other end of the side wall 2212 is connected to the end cover 222 to form the connection portion 223. In the first direction, the bottom wall 2211 and the end cover 222 are disposed opposite to each other.

The end cover 222 supports the electrode assembly 23 in the gravity direction, which corresponds to a scenario in which the battery cell 20 is used in the inverted orientation. When the battery cell 20 is used in the inverted orientation, the risk of liquid leakage from the connection portion 223 is increased, thereby enabling the protective member 21 to provide better protection. In addition, the electrode terminal 24 is disposed on the bottom wall 2211, the electrode terminal 24 is disposed at the top of the housing 22, and liquid exerts small pressure on the electrode terminal 24, and the electrode terminal 24 is relatively less prone to liquid leakage.

Embodiments of this application further provide a battery 100. The battery 100 includes the foregoing battery cell 20.

In some embodiments, the battery 100 further includes a box 10, the battery cell 20 is disposed in the box 10, and the end cover 222 is disposed on a side of the battery cell 20 that is close to a bottom wall 2211 of the box 10.

The bottom wall 2211 of the box 10 is a wall surface on the box 10 that is opposite to an opening end of the box 10.

The end cover 222 is disposed on a side of the battery cell 20 that is close to the bottom wall 2211 of the box 10, i.e., the battery cell 20 is inverted in the box 10.

Embodiments of this application further provide a power consuming device. The power consuming device includes the foregoing battery 100. The battery 100 is configured to supply electric energy to the power consuming device.

According to some embodiments of this application, refer to FIG. 3 to FIG. 13.

Embodiments of this application provide a battery cell 20. The battery cell 20 includes a housing 22 and a protective member 21. The housing 22 includes a case 221 and an end cover 222. An opening is formed in at least one end of the case 221 in a first direction, and the end cover 222 closes the opening. The end cover 222 is connected to the case 221 to form a connection portion 223. The protective member 21 includes a main body portion 211 and a first flange portion 212. The main body portion 211 surrounds an outer surface of the case 221. In the first direction, the first flange portion 212 is connected to an end of the main body portion 211, and the first flange portion 212 is disposed on the end cover 222 and covers at least a part of the connection portion 223. The case 221 and the end cover 222 define the accommodating space, and the accommodating space is configured for accommodating the electrode assembly 23 of the battery cell 20. The opening is formed in at least one end of the case 221 in the first direction, to allow entry of the electrode assembly 23 into the case 221 through the opening. After the electrode assembly 23 enters the case 221, the end cover 222 closes the opening to isolate the electrode assembly 23 from an external environment. The main body portion 211 of the protective member 21 surrounds the outer surface of the case 221 such that the case 221 can be protected, thereby reducing the risk of damage to the case 221. The first flange portion 212 covers at least a part of the connection portion 223 such that liquid leakage from the connection portion 223 can be prevented to a certain extent, thereby reducing the liquid leakage speed, and improving the reliability of the battery cell 20 to a certain extent.

The first flange portion 212 includes a first absorbent layer 2121, and the first absorbent layer 2121 is configured to absorb liquid leaking from the connection portion 223. The first absorbent layer 2121 can absorb liquid leaking from the connection portion 223, to mitigate the risk of short-circuit-induced fire or ignition caused by high-voltage arcing due to spreading of liquid leaking from the connection portion 223, thereby improving the reliability of the battery cell 20.

The protective member 21 is provided with a first adhesive layer 2122, and the first adhesive layer 2122 connects the first absorbent layer 2121 and the end cover 222. The first absorbent layer 2121 includes a first adhesive-free zone 21211 without the first adhesive layer 2122, and in the first direction, a projection of the first adhesive-free zone 21211 covers at least a part of the connection portion 223. The first absorbent layer 2121 and the end cover 222 are bonded by the first adhesive layer 2122 such that the first absorbent layer 2121 and the end cover 222 are conveniently connected and manufacturing costs are low. The first adhesive layer 2122 may block liquid from flowing to the first absorbent layer 2121, affecting liquid absorption in the first absorbent layer 2121. Therefore, the first adhesive-free zone 21211 is disposed in a region of the first absorbent layer 2121 that corresponds to the connection portion 223, and the first adhesive layer 2122 is not disposed in the first adhesive-free zone 21211, thereby enabling liquid leaking from the connection portion 223 to flow to the first absorbent layer 2121 to be absorbed by the first absorbent layer 2121.

The case 221 includes a side wall 2212 and a bottom wall 2211, and the side wall 2212 and the bottom wall 2211 are integrally formed. In the first direction, one end of the side wall 2212 is connected to the bottom wall 2211, and the other end of the side wall 2212 defines the opening. The main body portion 211 surrounds an outer surface of the side wall 2212, and the second accommodating groove 214 is provided in the bottom wall 2211. The main body portion 211 includes a second absorbent layer 2111, the protective member 21 further includes the second flange portion 213, the second flange portion 213 is connected to an end of the main body portion 211 opposite to the first flange portion 212 in the first direction, and the second flange portion 213 covers at least a part of the bottom wall 2211. The second flange portion 213 includes a third absorbent layer 2131, and the second absorbent layer 2111 connects the third absorbent layer 2131 and the first absorbent layer 2121. The second absorbent layer 2111 and the third absorbent layer 2131 are configured to transport the liquid absorbed by the first absorbent layer 2121 to the second accommodating groove 214. The bottom wall 2211 generally has a large thickness, thereby making it relatively easy to provide the second accommodating groove 214, and the strength of the bottom wall 2211 is easily maintained after the second accommodating groove 214 is provided. When the battery cell 20 is used in the standard orientation, liquid leaking from the connection portion 223 can flow into the second accommodating groove 214 under gravity, thereby enabling the second accommodating to collect the liquid. When the battery cell 20 is used in the inverted orientation, liquid leaking from the connection portion 223 needs to travel upward to the bottom wall 2211 from the side wall 2212 and enter the second accommodating groove 214, which can significantly reduce the liquid leakage speed, thereby improving the reliability of the battery cell 20. The third absorbent layer 2131 can absorb liquid. Because the second absorbent layer 2111 connects the first absorbent layer 2121 and the third absorbent layer 2131, the liquid absorbed by the first absorbent layer 2121 can flow to the third absorbent layer 2131 through the second absorbent layer 2111. The liquid can be transported to the second accommodating groove 214 from the third absorbent layer 2131 to be temporarily stored in the second accommodating groove 214. The third absorbent layer 2131 is disposed, thereby enabling the protective member 21 to absorb or store more liquid, and enabling liquid transfer into the second accommodating groove 214.

The protective member 21 is provided with a third adhesive layer 2132, and the third adhesive layer 2132 connects the third absorbent layer 2131 and the bottom wall 2211. The third absorbent layer 2131 includes a third adhesive-free zone 21311 without the third adhesive layer 2132, a position of the third adhesive-free zone 21311 corresponds to a position of the second accommodating groove 214, and an edge of the third adhesive-free zone 21311 extends beyond an edge of the second accommodating groove 214. The third absorbent layer 2131 and the bottom wall 2211 are bonded by the third adhesive layer 2132 such that the second flange portion 213 and the bottom wall 2211 are conveniently connected, and manufacturing costs are low. However, the second adhesive layer 2112 may block liquid from flowing from the third absorbent layer 2131 to the second accommodating groove 214, thereby making it difficult for liquid to enter the second accommodating groove 214. Therefore, the third adhesive-free zone 21311 is disposed in a region of the third absorbent layer 2131 that corresponds to the second accommodating groove 214, and the third adhesive layer 2132 is not disposed in the third adhesive-free zone 21311, thereby enabling the liquid in the third absorbent layer 2131 to flow to the second accommodating groove 214. The edge of the third adhesive-free zone 21311 extends beyond the edge of the second accommodating groove 214 such that the third adhesive-free zone 21311 has a large range, thereby making it easier for the liquid in the third absorbent layer 2131 to enter the second accommodating groove 214.

The first absorbent layer 2121, the second absorbent layer 2111, and the third absorbent layer 2131 are integrally formed. The first absorbent layer 2121, the second absorbent layer 2111, and the third absorbent layer 2131 are integrally formed such that the protective member 21 has enhanced integrity and is less prone to liquid leakage.

The first flange portion 212 includes a first insulating layer 2123, and the first insulating layer 2123 is disposed on a side of the first absorbent layer 2121 that is away from the end cover 222. The main body portion 211 includes a second insulating layer 2113, and the second insulating layer 2113 is disposed on a side of the second absorbent layer 2111 that is away from the case 221. The second flange portion 213 includes a third insulating layer 2133, and the third insulating layer 2133 is disposed on a side of the third absorbent layer 2131 that is away from the bottom wall 2211. The second insulating layer 2113 connects the first insulating layer 2123 and the third insulating layer 2133. The first insulating layer 2123, the second insulating layer 2113, and the third insulating layer 2133 are integrally formed. The first insulating layer 2123, the second insulating layer 2113, and the third insulating layer 2133 all have an insulating property, and can respectively insulate and isolate the first absorbent layer 2121, the second absorbent layer 2111, and the third absorbent layer 2131 from other components respectively, thereby reducing the risk of a short circuit.

The first flange portion 212 includes a fourth adhesive layer 2124, and the fourth adhesive layer 2124 connects the first absorbent layer 2121 and the first insulating layer 2123. The main body portion 211 includes a fifth adhesive layer 2114, and the fifth adhesive layer 2114 connects the second absorbent layer 2111 and the second insulating layer 2113. The second flange portion 213 includes a sixth adhesive layer 2134, and the sixth adhesive layer 2134 connects the third absorbent layer 2131 and the third insulating layer 2133.

The protective member 21 is an insulating film. The protective member 21 surrounds the outer surface of the case 221 and folds toward the end cover 222 to form the first flange portion 212, and the first flange portion 212 covers at least a part of the connection portion 223. The insulating film surrounds the outer surface of the case 221 such that the case 221 can be insulated and isolated from other components, thereby reducing the risk of a short circuit due to contact between the case 221 and another component. In addition, the insulating film blocks at least a part of the connection portion 223 such that liquid leakage from the connection portion 223 can be prevented to a certain extent, thereby reducing the liquid leakage speed, and improving the reliability of the battery cell 20 to a certain extent.

It needs to be noted that the embodiments in this application and the features in the embodiments may be combined with each other without causing any conflict.

The foregoing descriptions are merely preferred embodiments of this application, but are not intended to limit this application. A person skilled in the art may make various modifications and changes to this application. Any modification, equivalent replacement, or improvement made without departing from the spirit and principle of this application shall fall within the scope of protection of this application.

## Claims

1. A battery cell, comprising:
a housing, comprising a case and an end cover, wherein an opening is formed in at least one end of the case in a first direction, the end cover closes the opening, and the end cover is connected to the case to form a connection portion; and
a protective member, comprising a main body portion and a first flange portion, wherein the main body portion surrounds an outer surface of the case, and in the first direction, the first flange portion is connected to an end of the main body portion, and the first flange portion is disposed on the end cover and covers at least a part of the connection portion.

2. The battery cell according to claim 1, wherein the first flange portion comprises a first absorbent layer, and the first absorbent layer is configured to absorb liquid.

3. The battery cell according to claim 2, wherein the protective member is provided with a first adhesive layer, and the first adhesive layer connects the first absorbent layer and the end cover.

4. The battery cell according to claim 3, wherein the first absorbent layer comprises a first adhesive-free zone without the first adhesive layer, and in the first direction, a projection of the first adhesive-free zone covers at least a part of the connection portion.

5. The battery cell according to claim 4, wherein the first adhesive-free zone is connected to the main body portion, a width of the first adhesive-free zone is A, and a width of the first absorbent layer is B, satisfying 0.1B ≤ A ≤ 0.6B.

6. The battery cell according to claim 4 or 5, wherein the protective member is provided with a second adhesive layer, and the second adhesive layer connects the main body portion and the case.

7. The battery cell according to claim 6, wherein the main body portion comprises a second adhesive-free zone without the second adhesive layer, in a second direction, a projection of the second adhesive-free zone covers at least a part of the connection portion, and the second direction is perpendicular to the first direction.

8. The battery cell according to claim 7, wherein the second adhesive-free zone is connected to the first adhesive-free zone, and in the first direction, a width of the second adhesive-free zone is C, satisfying 2 mm ≤ C ≤ 10 mm.

9. The battery cell according to any one of claims 2 to 8, wherein a first accommodating groove is provided in an outer surface of the end cover, and the first accommodating groove is configured to accommodate the liquid.

10. The battery cell according to claim 9, wherein the first absorbent layer covers the first accommodating groove.

11. The battery cell according to any one of claims 2 to 8, wherein a second accommodating groove is provided in the outer surface of the case, and the second accommodating groove is configured to accommodate the liquid.

12. The battery cell according to claim 11, wherein the case comprises a side wall and a bottom wall, the side wall and the bottom wall are integrally formed, in the first direction, one end of the side wall is connected to the bottom wall, the other end of the side wall defines the opening, the main body portion surrounds an outer surface of the side wall, and the second accommodating groove is provided in the side wall.

13. The battery cell according to claim 12, wherein the main body portion comprises a second absorbent layer, the second absorbent layer is connected to the first absorbent layer, and the second absorbent layer is configured to transport the liquid absorbed by the first absorbent layer to the second accommodating groove.

14. The battery cell according to claim 13, wherein the second absorbent layer covers the second accommodating groove.

15. The battery cell according to claim 11, wherein the case comprises a side wall and a bottom wall, the side wall and the bottom wall are integrally formed, in the first direction, one end of the side wall is connected to the bottom wall, the other end of the side wall defines the opening, the main body portion surrounds an outer surface of the side wall, and the second accommodating groove is provided in the bottom wall.

16. The battery cell according to claim 15, wherein the main body portion comprises a second absorbent layer, the protective member further comprises a second flange portion, the second flange portion is connected in the first direction to an end of the main body portion opposite to the first flange portion, the second flange portion covers at least a part of the bottom wall, the second flange portion comprises a third absorbent layer, the second absorbent layer connects the third absorbent layer and the first absorbent layer, and the second absorbent layer and the third absorbent layer are configured to transport the liquid absorbed by the first absorbent layer to the second accommodating groove.

17. The battery cell according to claim 16, wherein the third absorbent layer covers the second accommodating groove.

18. The battery cell according to claim 16 or 17, wherein the protective member is provided with a third adhesive layer, the third adhesive layer connects the third absorbent layer and the bottom wall, the third absorbent layer comprises a third adhesive-free zone without the third adhesive layer, a position of the third adhesive-free zone corresponds to a position of the second accommodating groove, and an edge of the third adhesive-free zone extends beyond an edge of the second accommodating groove.

19. The battery cell according to claim 18, wherein in the second direction, a distance between the edge of the third adhesive-free zone and the edge of the second accommodating groove is D, satisfying D ≥ 2 mm; and
the second direction is perpendicular to the first direction.

20. The battery cell according to any one of claims 11 to 19, wherein an absorbent material is filled in the second accommodating groove.

21. The battery cell according to any one of claims 2 to 20, wherein a material of the first absorbent layer has an absorption capacity for the liquid equivalent to at least three times a volume of the material.

22. The battery cell according to any one of claims 2 to 20, wherein a material of the first absorbent layer comprises at least one of sponge, carbon fiber, and adsorbent resin.

23. The battery cell according to any one of claims 2 to 20, wherein the first flange portion comprises a first insulating layer, and the first insulating layer is disposed on a side of the first absorbent layer that is away from the end cover.

24. The battery cell according to claim 23, wherein the first flange portion comprises a fourth adhesive layer, and the fourth adhesive layer connects the first absorbent layer and the first insulating layer.

25. The battery cell according to any one of claims 2 to 24, wherein the main body portion comprises the second absorbent layer, and the second absorbent layer is connected to the first absorbent layer.

26. The battery cell according to any one of claims 2 to 25, wherein the case comprises the side wall and the bottom wall, the side wall and the bottom wall are integrally formed, in the first direction, one end of the side wall is connected to the bottom wall, the other end of the side wall defines the opening, and the main body portion surrounds the outer surface of the side wall; and
the protective member comprises the second flange portion, the second flange portion is connected to the end of the main body portion opposite to the first flange portion in the first direction, and the second flange portion covers at least a part of the bottom wall.

27. The battery cell according to claim 26, wherein the main body portion comprises the second absorbent layer, the second flange portion comprises the third absorbent layer, and the second absorbent layer connects the third absorbent layer and the first absorbent layer.

28. The battery cell according to claim 27, wherein the first absorbent layer, the second absorbent layer, and the third absorbent layer are integrally formed.

29. The battery cell according to any one of claims 1 to 28, wherein the first flange portion covers the entire surface of the connection portion.

30. The battery cell according to any one of claims 1 to 29, wherein the protective member is an insulating film.

31. The battery cell according to any one of claims 1 to 30, wherein the battery cell further comprises an electrode assembly, the electrode assembly is accommodated in the housing, and the end cover is configured to support the electrode assembly in a gravity direction.

32. A battery, comprising the battery cell according to any one of claims 1 to 31.

33. The battery according to claim 32, wherein the battery further comprises a box, the battery cell is disposed in the box, and the end cover is disposed on a side of the battery cell that is close to a bottom wall of the box.

34. A power consuming device, comprising the battery according to claim 32 or 33, wherein the battery is configured to supply electric energy to the power consuming device.
